(19) Europäisches Patentamt
European Patent Office
Office européen des brevets

(11) EP 4 441 141 B1

(12) **EUROPEAN PATENT SPECIFICATION**

(45) Date of publication and mention of the grant of the patent:
**20.05.2026 Bulletin 2026/21**

(21) Application number: **22823004.1**

(22) Date of filing: **29.11.2022**

(51) International Patent Classification (IPC):
***C08L 23/12** (2006.01)* ***C08F 210/06** (2006.01)*
***C08F 2/00** (2006.01)* ***C08F 4/659** (2006.01)*

(52) Cooperative Patent Classification (CPC):
(C-Sets available)
**C08F 210/06; C08L 23/12;** C08F 110/06;
C08L 2205/025; C08L 2207/20; C08L 2308/00;
C08L 2314/06 (Cont.)

(86) International application number:
**PCT/EP2022/083613**

(87) International publication number:
**WO 2023/099448 (08.06.2023 Gazette 2023/23)**

# (54) POLYPROPYLENE COMPOSITION SUITABLE FOR PACKAGING APPLICATIONS

POLYPROPYLENZUSAMMENSETZUNG FÜR VERPACKUNGSANWENDUNGEN

COMPOSITION DE POLYPROPYLÈNE CONVENANT AUX APPLICATIONS D’EMBALLAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **01.12.2021 EP 21211753**

(43) Date of publication of application:
**09.10.2024 Bulletin 2024/41**

(73) Proprietor: **Borealis GmbH**
**1020 Vienna (AT)**

(72) Inventors:
- **WANG, Jingbo**
  **4021 Linz (AT)**
- **GAHLEITNER, Markus**
  **4021 Linz (AT)**
- **BERNREITNER, Klaus**
  **4021 Linz (AT)**
- **FRIEDRICH, Karlheinz**
  **2320 Schwechat (AT)**
- **KNIESEL, Claudia**
  **4021 Linz (AT)**
- **ABBASI, Mahdi**
  **4021 Linz (AT)**

(74) Representative: **Maiwald GmbH**
**Elisenhof**
**Elisenstraße 3**
**80335 München (DE)**

(56) References cited:
**WO-A1-2020/182435** **WO-A1-2021/144404**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 110/06, C08F 4/65927;**
**C08F 210/06, C08F 2/001;**
**C08F 210/06, C08F 4/65927;**
**C08L 23/12, C08L 23/06;**
**C08L 23/12, C08L 23/14;**
C08F 110/06, C08F 2500/12, C08F 2500/35;
C08F 210/06, C08F 210/16, C08F 2500/05,
C08F 2500/12, C08F 2500/17, C08F 2500/27,
C08F 2500/30, C08F 2500/31, C08F 2500/33,
C08F 2500/34

## Description

The present invention relates to a high melt flow polypropylene composition with an improved balance of properties in regard of mechanical and impact properties, a process for producing said polypropylene composition, an article comprising said polypropylene composition and the use of said polypropylene composition for the production of an article.

## Technical background

Heterophasic propylene copolymers are widely used in the packaging industry, due to their excellent combination of stiffness and impact behaviour. One can find the application of heterophasic propylene copolymers in many aspects of daily life. One of the main application areas of polypropylene is to be found in injection molding of thin-wall articles. Typical examples include plastics cups, pails and small containers mainly intended for food packaging. In order to be suitable for thin-wall injection molding application, the polypropylene should demonstrate excellent processability/flowablity, normally expressed by high melt flow rate (MFR), i.e. low average molecular weight. Still, there is the desire within the polymer and packaging industry to improve the available heterophasic polypropylene compositions with high melt flow rates (MFR) in view of mechanical properties and especially the amount of impurities.

One of the fundamental problems in polymer business is recycling. At the moment, the market for recyclates, particularly recyclates from household trash, commonly denoted PCR ('post-consumer recyclates') is somewhat limited. Starting from household trash, the sorting and separation processes employed will not allow preparing pure polymers, i.e. there will always be some contaminants, or the processes may even result in blends of different polymers. When it comes to polyolefins, which constitute the vast majority of the polymer fraction of the collected household trash, a perfect separation of polypropylene and polyethylene is very difficult and cost-intensive. Recycled polyolefin materials, particularly post-consumer resins, are conventionally cross-contaminated with non-polyolefin materials such as polyethylene terephthalate, polyamide, polystyrene or non-polymeric substances like wood, paper, glass or aluminum. Even worse, those post-consumer recycled polyolefin materials are readily available on a multi-ton scale, but unfortunately have limited mechanical properties and frequently severe odor and/or emission problems.

For applications in the packaging industry materials are required, which combine good flowability, a low amount of impurities, and balanced mechanical properties in terms of stiffness and impact strength. Recently, the demand of the market has expanded in direction of using recycled polyolefins in blends with virgin polymers in order to fulfil specific requirements.

However, there is a deeply felt need for allowing the upcycling and reuse of post-consumer polyolefin recyclates in final products without health and safety hazards.

Non-published patent applications EP 21 178 566.2 and EP 21 178 547.2 are related to polypropylene compositions for exterior and interior automotive applications which contain mixed plastics polypropylene-based blends originating from post-consumer recycled polyolefin streams and inorganic fillers, such as talc. These compositions show a beneficial balance of mechanical properties and good flowabability. However, these compositions need rather high amounts of virgin polymers so that the amount of post-consumer recyclates is limited.

The present invention is based on the surprising finding that by carefully selecting the heterophasic propylene copolymer based virgin component in polypropylene based compositions, which contain mixed-plastics polypropylene/-polyethylene blends originating from post-consumer recycled polyolefin streams, polypropylene based compositions with a superior balance of properties in regard of impact properties, mechanical properties, such as in flexural modulus, flowability, shown in a high melt flow rate, and a low amount of impurities exemplified in a low amount of VOC and FOG are obtained. These compositions comprise a high amount of mixed-plastics polypropylene/polyethylene blends originating from post-consumer recycled polyolefin streams. Thus, the compositions of the invention comprising mixed-plastics polypropylene/polyethylene blend originating from post-consumer recycled polyolefin streams qualify for injection moulding applications, especially in packaging applications, such as thin wall packaging applications, and can replace sophisticated heterophasic polypropylene copolymers.

## Summary of the invention

The present invention relates to a composition obtainable by blending components (A) and (B)

(A) 50 to 95 wt.-%, preferably 55 to 90 wt.-%, more preferably 60 to 88 wt.-% of a mixed-plastics polypropylene/-polyethylene blend; and
(B) 5 to 50 wt.-%, preferably 10 to 45 wt.-%, more preferably 12 to 40 wt.-% of a heterophasic propylene copolymer; whereby all percentages refer to the total composition, and whereby

the mixed-plastics polypropylene/polyethylene blend (A) has

- a crystalline fraction (CF) content determined according to CRYSTEX QC analysis in the range from 85.0 to 96.0 wt.-%, preferably in the range from 86.5 to 95.5 wt.-%, and
- a soluble fraction (SF) content determined according to CRYSTEX QC analysis in the range from 4.0 to 15.0 wt.-%, preferably in the range from 4.5 to 13.5 wt.- %, whereby
- said crystalline fraction (CF) has an ethylene content (C2(CF)), as determined by FT-IR spectroscopy calibrated by quantitative $^{13}C$-NMR spectroscopy, in the range from 11.0 to 55.0 wt.-%, preferably in the range of 20.0 to 49.5 wt.-%; and
- said soluble fraction (SF) has an intrinsic viscosity (iV(SF)) in the range from 0.9 to 2.1 dl/g, preferably in the range of 1.0 to 2.0 dl/g;

the heterophasic propylene copolymer (B) comprises a matrix phase and an elastomer phase dispersed therein and has

- a melt flow rate $MFR_2$ (230°C, 2.16 kg, ISO 1133) of 105 to 320 g/10min, preferably 107 to 300 g/10min, more preferably 110 to 280 g/10min;
- a soluble fraction (SF) content determined according to CRYSTEX QC analysis in the range of 10.0 to 35.0 wt.-%, preferably in the range of 11.0 to 32.5 wt.-%, more preferably in the range of 12.0 to 30.0 wt.-%, and
- an intrinsic viscosity of said soluble fraction (iV(SF)) as measured in decalin according to DIN ISO 1628/1 at 135°C of at least 2.0 dl/g, preferably in the range of 2.3 to 4.5 dl/g, more preferably in the range of 2.5 to 4.3 dl/g;

the composition has

- a melt flow rate $MFR_2$ (230°C, 2.16 kg, ISO 1133) of at least 9.0 g/10min, preferably 9.5 to 100 g/10min, more preferably 10.0 to 75 g/10min.

Further, the present invention relates to a process for producing the composition as described above or below comprising the steps of:

a) Polymerizing propylene in the presence of a single-site catalyst system in a first polymerization reactor for producing a first propylene polymer fraction;
b) Transferring a polymerization mixture comprising the single site catalyst system and the first propylene polymer fraction from the first polymerization reactor to a second polymerization reactor;
c) Polymerizing propylene in the presence of the single-site catalyst system in the second polymerization reactor for producing a second propylene polymer fraction;
d) Transferring a polymerization mixture comprising the single site catalyst system and the first and second propylene polymer fractions from the second polymerization reactor to a third polymerization reactor;
e) Polymerizing propylene and ethylene in the presence of a single-site catalyst system in the third polymerization reactor for producing a third propylene-ethylene copolymer fraction;
f) Withdrawing a polymerization mixture comprising the single site catalyst system, the first and second propylene polymer fractions and the third propylene-ethylene copolymer fraction from the third polymerization reactor; and
g) Obtaining the heterophasic propylene copolymer (B) comprising the first and second propylene polymer fractions and the third propylene-ethylene copolymer fraction;
h) Blending 5 to 50 wt.-%, preferably 10 to 45 wt.-%, more preferably 12 to 40 wt.- % of the heterophasic propylene copolymer (B) with 50 to 95 wt.-%, preferably 55 to 90 wt.-%, more preferably 60 to 88 wt.-% of the mixed-plastics polypropylene/polyethylene blend (A).

Still further, the present invention relates to an article comprising the composition as described above or below.
Additionally, the present invention relates to the use of the composition as described above or below for the production of an article.
Finally, the present invention relates to the use of a heterophasic propylene copolymer having

- a melt flow rate $MFR_2$ (230°C, 2.16 kg, ISO 1133) of 105 to 320 g/10min, preferably 107 to 300 g/10min, more preferably 110 to 280 g/10min;
- a soluble fraction (SF) content determined according to CRYSTEX QC analysis in the range of 10.0 to 35.0 wt.-%, preferably in the range of 11.0 to 32.5 wt.-%, more preferably in the range of 12.0 to 30.0 wt.-%, and

- an intrinsic viscosity of said soluble fraction (iV(SF)) as measured in decalin according to DIN ISO 1628/1 at 135°C of at least 2.0 dl/g, preferably in the range of 2.3 to 4.5 dl/g, more preferably in the range of 2.5 to 4.3 dl/g;

in a composition as described above or below for increasing melt flow rate $MFR_2$ (230°C, 2.16 kg, ISO1133) and the flexural modulus and reducing the VOC and FOG content of said composition.

**Definitions**

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below. Unless clearly indicated otherwise, use of the terms "a," "an," and the like refers to one or more.

Mixed plastics is defined as the presence of low amounts of compounds usually not found in virgin polypropylene compositions such as polystyrenes, polyamides, polyesters, wood, paper, limonene, aldehydes, ketones, fatty acids, metals, and/or long term decomposition products of stabilizers. Virgin polypropylene blends denote blends as directly originating from the production process without intermediate use. As a matter of definition "mixed plastics" can be equated with detectable amounts of polystyrene and/or polyamide-6 and/or limonene and/or fatty acids.

Mixed plastics thereby can originate from both post-consumer waste and industrial waste, as opposed to virgin polymers. Post-consumer waste refers to objects having completed at least a first use cycle (or life cycle), i.e. having already served their first purpose. In contrast to that, industrial waste refers to manufacturing scrap, respectively conversion scrap, which does not normally reach a consumer.

It will be understood by those skilled in the art that a soluble fraction (SF) as obtained by CRYSTEX QC analysis having an intrinsic viscosity (iV(SF)) in the range from 0.9 to 2.1 dl/g is typically found in material from recycling streams. In a preferred aspect of the invention the soluble fraction (SF) as obtained by CRYSTEX QC analysis has an intrinsic viscosity (iV(SF)) in the range from 1.0 to 2.0 dl/g.

A polymer blend is a mixture of two or more polymeric components. In general, the blend can be prepared by mixing the two or more polymeric components. A suitable mixing procedure known in the art is post-polymerization blending. Post-polymerization blending can be dry blending of polymeric components such as polymer powders and/or compounded polymer pellets or melt blending by melt mixing the polymeric components.

A propylene homopolymer is a polymer, which essentially consists of propylene monomer units. Due to impurities especially during commercial polymerization processes a propylene homopolymer can comprise up to 0.1 mol% comonomer units, preferably up to 0.05 mol% comonomer units and most preferably up to 0.01 mol% comonomer units.

"Polypropylene-polyethylene blend" refers to a composition containing both polypropylene and polyethylene, including also polypropylene copolymers as well as polyethylene copolymers. As a direct determination of the polypropylene content and polyethylene content is not possible, the weight ratio polypropylene to polyethylene of 20/80 to 80/20 denotes the equivalent ratio as determined from calibration by iPP and HDPE and determination by IR spectroscopy.

A polypropylene means a polymer being composed of units derived from propylene in an amount of more than 50 mol-%.

A polyethylene means a polymer being composed of units derived from ethylene in an amount of more than 50 mol-%.

The presence of a heterophasic nature can be easily determined by the number of glass transition points, like in dynamic-mechanical analysis (DMA), and/or high resolution microscopy, like scanning electron microscopy (SEM), transmission electron microscopy (TEM) or atomic force microscopy (AFM).

The term "XCS" refers to the xylene cold soluble fraction (XCS wt.-%) determined at 25 °C according to ISO 16152. The term "XCI" refers to the xylene cold insoluble fraction (XCI wt.-%) determined at 25 °C according to ISO 16152.

Reactor blend is a blend originating from the production in two or more reactors coupled in series or in a reactor having two or more reaction compartments. A reactor blend may alternatively result from blending in solution. A reactor blend stands in contrast to a compound as produced by melt extrusion.

If not indicated otherwise "%" refers to weight-% (wt.-%).

**Detailed description**

<u>Composition</u>

In a first aspect, the present invention relates to a composition obtainable by blending components (A) and (B)

(A) 50 to 95 wt.-%, preferably 55 to 90 wt.-%, more preferably 60 to 88 wt.-% of a mixed-plastics polypropylene/-polyethylene blend; and
(B) 5 to 50 wt.-%, preferably 10 to 45 wt.-%, more preferably 12 to 40 wt.-% of a heterophasic propylene copolymer; whereby all percentages refer to the total composition, and whereby

the mixed-plastics polypropylene/polyethylene blend (A) has

- a crystalline fraction (CF) content determined according to CRYSTEX QC analysis in the range from 85.0 to 96.0 wt.-%, preferably in the range from 86.5 to 95.5 wt.-%, and
- a soluble fraction (SF) content determined according to CRYSTEX QC analysis in the range from 4.0 to 15.0 wt.-%, preferably in the range from 4.5 to 13.5 wt.- %, whereby
- said crystalline fraction (CF) has an ethylene content (C2(CF)), as determined by FT-IR spectroscopy calibrated by quantitative $^{13}C$-NMR spectroscopy, in the range from 11.0 to 55.0 wt.-%, preferably in the range of 20.0 to 49.5 wt.-%; and
- said soluble fraction (SF) has an intrinsic viscosity (iV(SF)) in the range from 0.9 to 2.1 dl/g, preferably in the range of 1.0 to 2.0 dl/g;

the heterophasic propylene copolymer (B) comprises a matrix phase and an elastomer phase dispersed therein and has

- a melt flow rate $MFR_2$ (230°C, 2.16 kg, ISO 1133) of 105 to 320 g/10min, preferably 107 to 300 g/10min, more preferably 110 to 280 g/10min;
- a soluble fraction (SF) content determined according to CRYSTEX QC analysis in the range of 10.0 to 35.0 wt.-%, preferably in the range of 11.0 to 32.5 wt.-%, more preferably in the range of 12.0 to 30.0 wt.-%, and
- an intrinsic viscosity of said soluble fraction (iV(SF)) as measured in decalin according to DIN ISO 1628/1 at 135°C of at least 2.0 dl/g, preferably in the range of 2.3to 4.5 dl/g, more preferably in the range of 2.5 to 4.3 dl/g;

the composition has

- a melt flow rate $MFR_2$ (230°C, 2.16 kg, ISO 1133) of at least 9.0 g/10min, preferably 9.5 to 100 g/10min, more preferably 10.0 to 75 g/10min.

The composition according to the present invention has one or more of the following characteristics:
The composition has a melt flow rate $MFR_2$ (230°C, 2.16 kg, ISO 1133) of at least 9.0 g/10min, preferably 9.5 to 100 g/10min, more preferably 10.0 to 75 g/10min.
The composition according to the invention preferably shows a superior balance of properties in regard of mechanical properties, such as in in regard of the flexural modulus, impact properties, flowability, as can be seen from the melt flow rate described above, and especially a low amount of impurities as can be seen from the VOC and FOG contents and fogging.
The composition preferably has a flexural modulus (FM) in the range of 800 to 1300 MPa, preferably in the range of 850 to 1200 MPa, more preferably in the range of 865 to 1050 MPa, determined according to ISO 178 on injection moulded test specimen (80 x 10 x 4 $mm^3$) as produced according to EN ISO 1873-2.
Further, the composition preferably has a Charpy notched impact strength at 23 °C (CNIS, 23°C) in the range of 5.0 to 25.0 $kJ/m^2$, preferably in the range of 5.5 to 20.0 $kJ/m^2$, determined according to ISO 179/eA on injection moulded test specimen (80 x 10 x 4 $mm^3$) as produced according to EN ISO 1873-2.
It is preferred that the composition has a Charpy notched impact strength at 23°C, which meets the following inequation in relation its melt flow rate $MFR_2$ (230°C, 2.16 kg, ISO 1133)

$$\text{CNIS, 23°C [kJ/m}^2] > 7.8\ [\text{kJ/m}^2] - 0.17\ [\text{kJ/m}^2 / \text{g/10 min}] \cdot \text{MFR}_2\ [\text{g/10 min}]$$

with

CNIS, 23°C being the Charpy notched impact strength at 23°C of the composition, determined according to ISO 179/eA on injection moulding test specimen (80 x 10 x 4 $mm^3$) as produced according to EN ISO 1873-2, and $MFR_2$ being the melt flow rate $MFR_2$ (230°C, 2.16 kg, ISO 1133) of the composition.

Still further, the composition preferably has a Charpy notched impact strength at - 20°C (CNIS, -20°C) in the range of 1.7 to 5.0 kJ/$m^2$, preferably in the range of 1.9 to 4.0 kJ/$m^2$, determined according to ISO 179/eA on injection moulding test specimen (80 x 10 x 4 $mm^3$) as produced according to EN ISO 1873-2.

Additionally, the compositions preferably has one or more, preferably all of the following properties:

- a content of volatile organic compounds (VOC) of not more than 100 μg/g, preferably in the range of 5 to 95 μg/g, more preferably in the range of 10 to 90 μg/g, determined according to VDA 278; and/or
- a content of semi-volatile organic compounds (FOG) of not more than 1100 μg/g, preferably in the range of 50 to 1050 μg/g, more preferably in the range of 80 to 1000 μg/g, determined according to VDA 278; and/or
- an amount of fogging of not more than 5.0 mg, preferably in the range of 0.5 to 4.5 mg, determined according to DIN75201, Part B on 2 mm thick compression molded plaques.

The composition of the invention mandatorily comprises components (A) and (B) as described above or below in the accordantly described amounts.

The composition can optionally comprise additional polymeric components.

In the case that further polymeric components are present, the amount of the polymeric components in the composition is usually not higher than 5 wt.-%, preferably not higher than 2 wt.-%, based on the total weight of the composition. The lower limit of the further polymeric components, if present, is usually at least 0.1 wt.-%, preferably 0.2 wt.-%, based on the total weight of the composition.

It is, however, preferred that that the composition does not comprise further polymeric components, i.e. the amount of further polymeric components in the composition is 0 wt.-%.

In one embodiment the composition preferably does not comprise any inorganic fillers, such as talc, mica, wollastonite or glass fibers.

In another embodiment the composition preferably comprises inorganic fillers, such as talc, mica, wollastonite or glass fibers, preferably in an amount of 5 to 40 wt.-%, based on the total weight of the composition.

Mixed-plastics polypropylene/polyethylene blend (A)

The mixed-plastics polypropylene/polyethylene blend (A) is suitably characterized by CRYSTEX QC analysis. In the CRYSTEX QC analysis, a crystalline fraction (CF) and a soluble fraction (SF) are obtained which can be quantified and analyzed in regard of the monomer and comonomer content as well as the intrinsic viscosity (iV).

The mixed-plastics polypropylene/polyethylene blend (A) shows the following properties in the CRYSTEX QC analysis:

- a crystalline fraction (CF) content determined according to CRYSTEX QC analysis in the range from 85.0 to 96.0 wt.-%, preferably in the range from 86.5 to 95.5 wt.-%, and
- a soluble fraction (SF) content determined according to CRYSTEX QC analysis in the range from 4.0 to 15.0 wt%, preferably in the range from 4.5 to 13.5 wt.- %.

Said crystalline fraction (CF) has one or more, preferably all of the following properties:

- an ethylene content (C2(CF)), as determined by FT-IR spectroscopy calibrated by quantitative $^{13}C$-NMR spectroscopy, in the range from 11.0 to 55.0 wt.-%, preferably in the range of 20.0 to 49.5 wt.-%; and/or
- an intrinsic viscosity (iV(CF)), as measured in decalin according to DIN ISO 1628/1 at 135°C, preferably in the range from 1.0 to below 2.6 dl/g, more preferably in the range from 1.2 to 2.5 dl/g.

Said soluble fraction (SF) has one or more, preferably all of the following properties:

- an ethylene content (C2(SF)), as determined by FT-IR spectroscopy calibrated by quantitative $^{13}C$-NMR spectroscopy, preferably in the range from 20.0 to 55.0 wt.-%, preferably in the range from 22.0 to 50.0 wt.-%; and/or
- an intrinsic viscosity (iV(SF)), as measured in decalin according DIN ISO 1628/1 at 135°C, in the range from 0.9 to 2.1 dl/g, preferably in the range from 1.0 to 2.0 dl/g.

Preferably, the mixed-plastics polypropylene/polyethylene blend (A) comprises polypropylene and polyethylene in a weight ratio of 20/80 to 80/20, preferably in a weight ratio of 25/75 to 75/25.

The mixed-plastics polypropylene/polyethylene blend (A) preferably comprises units derived from propylene in an amount of from 50.0 to 95.0 wt.-%, more preferably from 51.5 to 90.0 wt.-%, still more preferably from 53.0 to 75.0 wt.-%.

The mixed-plastics polypropylene/polyethylene blend (A) preferably comprises units derived from ethylene in an

amount of from 5.0 to 50.0 wt.-%, more preferably from 10.0 to 48.5 wt.-%, still more preferably from 25.0 to 47.0 wt.-%.

Further, the mixed-plastics polypropylene/polyethylene blend (A) preferably has one or more, preferably all of the following properties:

- a melt flow rate $MFR_2$ (230°C, 2.16 kg, ISO1133) of 5.0 to 50 g/10min, preferably of 5.2 to 45 g/10min, more preferably of 5.4 to 40 g/10min; and/or
- a limonene content as determined by using solid phase microextraction (HS-SPME-GC-MS): 0.1 to 50 ppm; and/or
- a tensile modulus of from 800 to 1400 MPa, preferably from 850 to 1200 MPa; and/or
- a Charpy notched impact strength at 23°C (CNIS, 23°C) of from 4.0 to 8.5 kJ/$m^2$, preferably from 5.0 to 8.0 kJ/$m^2$; and/or
- a Charpy notched impact strength at -20°C (CNIS, -20°C) of from 1.0 to 4.5 kJ/$m^2$, preferably from 1.5 to 4.0 kJ/$m^2$.

The mixed-plastics polypropylene/polyethylene blend (A) according to the present invention is preferably present in the form of pellets. Pelletization contributes to the low amounts of volatile substances.

<u>Heterophasic propylene copolymer (B)</u>

The heterophasic polypropylene copolymer (B) comprises a matrix phase and an elastomeric phase dispersed therein.

The heterophasic propylene copolymer (B) is characterized by

- a melt flow rate $MFR_2$ (230°C, 2.16 kg, ISO 1133) of 105 to 320 g/10min, preferably 107 to 300 g/10min, more preferably 110 to 280 g/10min;
- a soluble fraction (SF) content determined according to CRYSTEX QC analysis in the range of 10.0 wt.-% to 35.0 wt.-%, preferably in the range of 11.0 to 32.5 wt.-%, more preferably in the range of 12.0 to 30.0 wt.-%; and
- an intrinsic viscosity of said soluble fraction, iV(SF), measured in decalin according to DIN ISO 1628/1 at 135°C, at least 2.0 dl/g, preferably in the range of 2.3 to 4.5 dl/g, more preferably in the range of 2.5 to 4.3 dl/g.

Preferably the heterophasic propylene copolymer (B) has one or more, preferably all, of the following properties:

- a crystalline fraction (CF), determined according to CRYSTEX QC analysis in an amount in the range of 65.0 to 90.0 wt.-%, preferably in the range of 67.5 to 89.0 wt.-%, more preferably in the range of 70.0 to 88.0 wt.-%; and/or
- an intrinsic viscosity of the crystalline fraction (iV(CF)) of not more than 1.2 dl/g, preferably in the range of 0.4 to 1.1 dl/g; and/or
- an ethylene content of the crystalline fraction (C2(CF)) of not more than 1.0 wt.- %, preferably in the range of 0 to 0.9 wt.-%, based on the total weight of the crystalline fraction (CF), as determined by FT-IR spectroscopy calibrated by quantitative $^{13}C$-NMR spectroscopy; and/or
- an ethylene content of the soluble fraction (C2(SF)) of 14.0 to 29.0 wt.-%, preferably in the range of 17.0 to 26.0 wt.-%, more preferably in the range of 19.0 to 24.0 wt.-%, based on the total weight of the soluble fraction (SF), as determined by FT-IR spectroscopy calibrated by quantitative $^{13}C$-NMR spectroscopy; and/or
- a flexural modulus in the range of 800 to 1500 MPa, preferably in the range of 850 to 1450 MPa, determined according to ISO 178 on injection moulded test specimen (80 x 10 x 4 $mm^3$) as produced according to EN ISO 1873-2; and/or
- a total ethylene content in the range of 2.0 to 5.5 wt.-%, preferably in the range of 2.5 to 5.0 wt.-%, based on the total weight of the heterophasic propylene copolymer (B), as determined by FT-IR spectroscopy calibrated by quantitative $^{13}C$-NMR spectroscopy; and/or
- a melting temperature in the range of 150 to 162°C, preferably in the range of 152 to 160°C, determined by DSC according to ISO 3146 (part 3, method C2); and/or
- a crystallization temperature in the range of 110 to 130°C, preferably in the range of 115 to 125°C, determined by DSC according to ISO 3146 (part 3, method C2); and/or
- a Charpy notched impact strength at 23°C in the range of 2.5 to 15.0 kJ/$m^2$, preferably in the range of 3.0 to 12.0 kJ/$m^2$, determined according to ISO 179/eA on injection moulded test specimen (80 x 10 x 4 $mm^3$) as produced according to EN ISO 1873-2; and/or
- a content of volatile organic compounds (VOC) of not more than 50 $\mu$g/g, preferably not more than 40 $\mu$g/g, more preferably not more than 35 $\mu$g/g, determined according to VDA 278, and usually at least 2 $\mu$g/g, preferably at least 4 $\mu$g/g; and/or
- a FOG content of not more than 300 $\mu$g/g, preferably not more than 250 $\mu$g/g, more preferably not more than 225 $\mu$g/g, and usually at least 20 $\mu$g/g, preferably at least 40 $\mu$g/g, determined according to VDA 278.

It is preferred that the heterophasic propylene copolymer (B) has a flexural modulus (FM), which meets the following in-equation in relation to the amount of soluble fraction (SF)

$$FM\ [MPa] > 1550\ [MPa] - 33.4\ [MPa/wt.\text{-}\%] \cdot amount\ (SF)\ [wt.\text{-}\%],$$

preferably

$$FM\ [MPa] > 1575\ [MPa] - 33.4\ [MPa/wt.\text{-}\%] \cdot amount\ (SF)\ [wt.\text{-}\%],$$

more preferably

$$FM\ [MPa] > 1600\ [MPa] - 33.4\ [MPa/wt.\text{-}\%] \cdot amount\ (SF)\ [wt.\text{-}\%],$$

most preferably

$$FM\ [MPa] > 1625\ [MPa] - 33.4\ [MPa/wt.\text{-}\%] \cdot amount\ (SF)\ [wt.\text{-}\%],$$

with

FM [MPa] is the flexural modulus of the heterophasic propylene copolymer (B) in MPa, and
amount (SF) [wt.-%] is the amount of the soluble fraction (SF) in the heterophasic propylene copolymer (B) in wt.-%.

It is preferred that the polypropylene composition has a Charpy notched impact strength at 23°C (CNIS, 23°C), which meets the following in-equation in relation to the melt flow rate ($MFR_2$)

$$CNIS,\ 23°C\ [kg/m^2] > 10.0\ [kg/m^2] - 0.05\ [kg/m^2\ /\ g/10\ min] \cdot MFR_2\ [g/10min],$$

preferably

$$CNIS,\ 23°C\ [kg/m^2] > 10.5\ [kg/m^2] - 0.05\ [kg/m^2\ /\ g/10\ min] \cdot MFR_2\ [g/10min],$$

more preferably

$$CNIS,\ 23°C\ [kg/m^2] > 11.0\ [kg/m^2] - 0.05\ [kg/m^2\ /\ g/10\ min] \cdot MFR_2\ [g/10min],$$

most preferably

$$CNIS,\ 23°C\ [kg/m^2] > 11.5\ [kg/m^2] - 0.05\ [kg/m^2\ /\ g/10\ min] \cdot MFR_2\ [g/10min].$$

It is preferred that the heterophasic propylene copolymer (B) consists of propylene units and ethylene units.

Although not measured the content of units derived from propylene (C3) in the soluble fraction (SF) preferably adds up to 100 wt.-% with the content of units derived from ethylene (C2) in the soluble fraction (SF).

The content of units derived from propylene (C3) in the soluble fraction (SF) is preferably 71.0 to 86.0 wt.-%, more preferably 74.0 to 83.0 wt.-%, still more preferably 76.0 to 81.0 wt.-%.

Although not measured the content of units derived from propylene (C3) in the crystalline fraction (CF) preferably adds up to 100 wt.-% with the content of units derived from ethylene (C2) in the crystalline fraction (CF).

The content of units derived from propylene (C3) in the crystalline fraction (CF) is preferably at least 99.0 wt.-%, more preferably 99.1 to 100 wt.-%.

The total content of units derived from propylene (C3) in the heterophasic propylene copolymer (B) is preferably 94.5 to 98.0 wt.-%, more preferably 95.0 to 97.5 wt.-%.

Such heterophasic propylene copolymers are preferably produced in accordance with the inventive process as described above or below in the presence of a single-site catalyst system.

Additives

Additives are commonly used in the composition according to the present invention. Preferably, the additives are selected from one or more of antioxidant(s), UV stabilizer(s), slip agent(s), nucleating agent(s), pigment(s), lubricant(s), masterbatch polymer(s) and/or anti-fogging agents.
Additives are usually present in the composition in an amount of from 0.01 to 5.0 wt.-%, preferably in an amount of 0.05 to 3.5 wt.-%, based on the total composition.

Process

In a further aspect the present invention relates to a process for producing the composition as described above or below comprising the steps of:

a) Polymerizing propylene in the presence of a single-site catalyst system in a first polymerization reactor for producing a first propylene polymer fraction;
b) Transferring a polymerization mixture comprising the single site catalyst system and the first propylene polymer fraction from the first polymerization reactor to a second polymerization reactor;
c) Polymerizing propylene in the presence of the single-site catalyst system in the second polymerization reactor for producing a second propylene polymer fraction;
d) Transferring a polymerization mixture comprising the single site catalyst system and the first and second propylene polymer fractions from the second polymerization reactor to a third polymerization reactor;
e) Polymerizing propylene and ethylene in the presence of a single-site catalyst system in the third polymerization reactor for producing a third propylene-ethylene copolymer fraction;
f) Withdrawing a polymerization mixture comprising the single site catalyst system, the first and second propylene polymer fractions and the third propylene-ethylene copolymer fraction from the third polymerization reactor; and
g) Obtaining the heterophasic propylene copolymer (B) comprising the first and second propylene polymer fractions and the third propylene-ethylene copolymer fraction;
h) Blending 5 to 50 wt.-%, preferably 10 to 45 wt.-%, more preferably 12 to 40 wt.- % of the heterophasic propylene copolymer (B) with 50 to 95 wt.-%, preferably 55 to 90 wt.-%, more preferably 60 to 88 wt.-% of the mixed-plastics polypropylene/polyethylene blend (A).

The first polymerization reactor preferably is a slurry phase reactor, such as a loop reactor.
It is preferred that the operating temperature in the first polymerization reactor, preferably the loop reactor, is in the range from 62 to 85 °C, more preferably in the range from 65 to 82 °C, still more preferably in the range from 67 to 80 °C.
Typically, the pressure in the first polymerization reactor, preferably in the loop reactor, is in the range from 20 to 80 bar, preferably 30 to 70 bar, like 35 to 65 bar.
It is preferred that in the first polymerization reactor, preferably the loop reactor, a propylene homopolymer is produced. Thus, it is preferred that the first propylene polymer fraction is a propylene homopolymer fraction.
Preferably hydrogen is added in the first polymerization reactor in order to control the molecular weight, i.e. the melt flow rate $MFR_2$.
Preferably the hydrogen to propylene ratio (H2/C3 ratio) in the first polypropylene reactor, preferably the loop reactor, is in the range from 0.70 to 2.5 mol/kmol, more preferably 0.75 to 2.0 mol/kmol.
Due to the strong hydrogen response of the catalyst and the rather high amount of hydrogen the melt flow rate of the first propylene polymer fraction is very high.
It is preferred that the first propylene polymer fraction has a melt flow rate $MFR_2$ (230°C, 2.16 kg, ISO 1133) in the range of 1000 to 15000 g/10 min, preferably in the range of 1100 to 13500 g/10 min, more preferably in the range of 1250 to 11500 g/10 min.
The second polymerization reactor preferably is a first gas phase reactor, such as a first fluidized bed gas phase reactor.
It is preferred that the operating temperature in the second polymerization reactor, preferably the first gas phase reactor, is in the range from 75 to 95 °C, more preferably in the range from 78 to 92 °C.
Typically, the pressure in the second polymerization reactor, preferably in the first gas phase reactor, is in the range from 5 to 50 bar, preferably 15 to 40 bar.
It is preferred that in the second polymerization reactor, preferably the first gas phase reactor, a propylene homopolymer is produced. Thus, it is preferred that the second propylene polymer fraction is a propylene homopolymer fraction.
Preferably hydrogen is added in the second polymerization reactor in order to control the molecular weight, i.e. the melt flow rate $MFR_2$.

Preferably the hydrogen to propylene ratio (H2/C3 ratio) in the second polypropylene reactor, preferably the first gas phase reactor, is in the range from 2.0 to 6.5 mol/kmol, more preferably 2.8 to 5.5 mol/kmol.

Due to the strong hydrogen response of the catalyst and the rather high amount of hydrogen the melt flow rate of the combined first and second propylene polymer fractions is very high.

It is preferred that the combined first and second propylene polymer fractions have a melt flow rate $MFR_2$ (230°C, 2.16 kg, ISO 1133) of at least 1000 g/10 min, preferably in the range 1200 to 9000 g/10 min, more preferably in the range of 1500 to 8000 g/10 min.

It is further preferred that the combined first and second propylene polymer fractions have fraction soluble in cold xylene at 25°C (XCS) in an amount not more than 2.0 wt.-%, preferably in the range of 0.1 to 1.5 wt.-%, based on the total weight of the combined first and second propylene polymer fractions.

The third polymerization reactor preferably is a second gas phase reactor, such as a second fluidized bed gas phase reactor.

It is preferred that the operating temperature in the third polymerization reactor, preferably the second gas phase reactor, is in the range from 65 to 85 °C, more preferably in the range from 68 to 82 °C. Typically the operating temperature in third polymerization reactor is lower than the operating temperature in the second polymerization reactor.

Typically, the pressure in the third polymerization reactor, preferably in the second gas phase reactor, is in the range from 5 to 50 bar, preferably 15 to 40 bar.

In the third polymerization reactor, preferably the second gas phase reactor, a propylene ethylene copolymer is produced. Thus, the third propylene polymer fraction is a propylene ethylene copolymer fraction.

The ethylene to propylene ratio (C2/C3 ratio) in the third polymerization polymerization reactor, preferably the second gas phase reactor, is in the range from 700 to 1000 mol/kmol, more preferably 800 to 950 mol/kmol.

Due to the high ethylene to propylene ratio (C2/C3 ratio) the third propylene copolymer fraction preferably is an elastomeric block copolymer with propylene rich sections and ethylene rich sections.

Preferably hydrogen is added in the second polymerization reactor in order to control the molecular weight, i.e. the melt flow rate $MFR_2$.

Preferably the hydrogen to ethylene ratio (H2/C2 ratio) in the third polymerization reactor, preferably the second gas phase reactor, is in the range from 0.5 to 3.5 mol/kmol, more preferably 1.0 to 2.5 mol/kmol.

It is preferred that the combined first, second and third propylene polymer fractions have a melt flow rate $MFR_2$ (230°C, 2.16 kg, ISO 1133) of at least 150 g/10 min, preferably in the range 165 to 500 g/10 min, more preferably in the range of 175 to 400 g/10 min.

It is further preferred that the combined first, second and third propylene polymer fractions have fraction soluble in cold xylene at 25°C (XCS) in an amount in the range of 8.0 to 32.0 wt.-%, preferably in the range of 9.0 to 30.0 wt.-%, more in the range of 10.0 to 28.0 wt.-%, based on the total weight of the heterophasic propylene copolymer (B), wherein the XCS fraction preferably has the following properties:

- an intrinsic viscosity (iV(XCS)) of at least 2.2 dl/g, preferably in the range of 2.3 to 4.6 dl/g, more preferably in the range of 2.5 to 4.4 dl/g, and
- an ethylene content (C2(XCS)) in the range of 15.0 to 30.0 wt.-%, preferably in the range of 18.0 to 27.0 wt.-%, more preferably in the range of 20.0 to 25.0 wt.- %, based on the total weight of the soluble fraction (SF), as determined by FT-IR spectroscopy calibrated by quantitative $^{13}C$-NMR spectroscopy.

Further the combined first, second and third propylene polymer fractions preferably have a total comonomer content, preferably ethylene (C2) content in the range of 2.0 to 5.5 wt.-%, preferably in the range of 2.5 to 5.0 wt.-%, based on the total weight of the polypropylene composition, as determined by FT-IR spectroscopy calibrated by quantitative $^{13}C$-NMR spectroscopy.

The combined first, second and third propylene polymer fractions preferably form a heterophasic propylene copolymer.

The preparation of the first, second and third propylene polymer fractions can comprise in addition to the (main) polymerization stages in the at least three polymerization prior thereto a pre-polymerization in a pre-polymerization reactor upstream to the first polymerization reactor.

In the pre-polymerization reactor, a polypropylene is produced. The pre-polymerization is preferably conducted in the presence of the single-site polymerization catalyst system. According to this embodiment, the single-site polymerization catalyst system is introduced to the pre-polymerization step. However, this shall not exclude the option that at a later stage for instance further co-catalyst is added in the polymerization process, for instance in the first reactor. In one embodiment, all components of the single site catalyst are only added in the pre-polymerization reactor, if a pre-polymerization is applied.

The pre-polymerization reaction is typically conducted at a temperature of 0 to 60 °C, preferably from 15 to 50 °C, and more preferably from 20 to 45 °C.

The pressure in the pre-polymerization reactor is not critical but must be sufficiently high to maintain the reaction mixture in liquid phase. Thus, the pressure may be from 20 to 100 bar, for example 30 to 70 bar.

In a preferred embodiment, the pre-polymerization is conducted as bulk slurry polymerization in liquid propylene, i.e. the liquid phase mainly comprises propylene, with optionally inert components dissolved therein.

It is possible to add other components also to the pre-polymerization stage. Thus, hydrogen may be added into the pre-polymerization stage to control the molecular weight of the polypropylene as is known in the art. Further, antistatic additives may be used to prevent the particles from adhering to each other or to the walls of the reactor.

The precise control of the pre-polymerization conditions and reaction parameters is within the skill of the art.

Due to the above defined process conditions in the pre-polymerization, preferably a mixture of the single site catalyst system and the polypropylene produced in the pre-polymerization reactor is obtained. Preferably, the single site catalyst system is (finely) dispersed in the polypropylene. In other words, the single site catalyst particles introduced in the pre-polymerization reactor are split into smaller fragments that are evenly distributed within the growing polypropylene. The sizes of the introduced single site catalyst particles as well as of the obtained fragments are not of essential relevance for the instant invention and within the skilled knowledge.

As mentioned above, if a pre-polymerization is used, subsequent to said pre-polymerization, the mixture of the single site catalyst and the polypropylene produced in the pre-polymerization reactor is transferred to the first polymerization reactor. Typically the total amount of the polypropylene produced in the pre-polymerization reactor in the first, second and third propylene polymer fractions is rather low and typically not more than 5.0 wt.-%, more preferably not more than 4.0 wt.-%, still more preferably in the range from 0.5 to 4.0 wt.-%, like in the range 1.0 of to 3.0 wt.-%.

In case that pre-polymerization is not used, propylene and the other ingredients such as the single site catalyst system are directly introduced into the first polymerization reactor.

The residence times of the polymerization mixtures in the different polymerization stages are adjusted to obtain the amounts of the first, second and third polymer fractions in the combined first, second and third polymer fractions.

Preferably the first propylene polymer fraction is present in an amount of from 40 to 60 wt.-%, more preferably from 45 to 55 wt.-%, based on the total weight of the combined first, second and third propylene polymer fractions. The amount of the polypropylene polypropylene produced in the pre-polymerization reactor, if present, is generally added to the amount of the first propylene polymer fraction.

Preferably the second propylene polymer fraction is present in an amount of from 25 to 45 wt.-%, more preferably from 30 to 40 wt.-%, based on the total weight of the combined first, second and third propylene polymer fractions.

Preferably the third propylene polymer fraction is present in an amount of from 10 to 30 wt.-%, more preferably from 15 to 25 wt.-%, based on the total weight of the combined first, second and third propylene polymer fractions.

<u>Catalyst system</u>

The single site catalyst system according to the present invention may be any supported metallocene catalyst system suitable for the production of isotactic polypropylene.

It is preferred that the single site catalyst system comprises a metallocene complex, a co-catalyst system comprising a boron-containing co-catalyst and/or aluminoxane co-catalyst, and a silica support.

In particular, it is preferred that the single site catalyst system comprises

(i) a metallocene complex of the general formula (I)

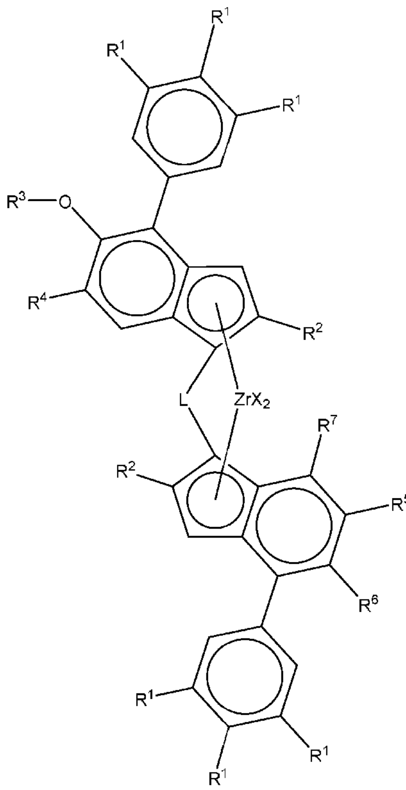

Formula (I)

wherein

each X independently is a sigma-donor ligand,
L is a divalent bridge selected from -R'$_2$C-, -R'$_2$C-CR'$_2$-, -R'$_2$Si-, -R'$_2$Si-SiR'$_2$-, - R'$_2$Ge-, wherein each R' is independently a hydrogen atom or a $C_1$-$C_{20}$-hydrocarbyl group optionally containing one or more heteroatoms from groups 14-16 of the periodic table or fluorine atoms, or optionally two R' groups taken together can form a ring,
each $R^1$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group, and optionally two adjacent $R^1$ groups can be part of a ring including the phenyl carbons to which they are bonded,
each $R^2$ independently are the same or can be different and are a $CH_2$-$R^8$ group, with $R^8$ being H or linear or branched $C_{1-6}$-alkyl group, $C_{3-8}$-cycloalkyl group, $C_{6-10}$-aryl group,
$R^3$ is a linear or branched $C_1$-$C_6$-alkyl group, $C_{7-20}$-arylalkyl, $C_{7-20}$-alkylaryl group or $C_6$-$C_{20}$-aryl group,
$R^4$ is a $C(R^9)_3$ group, with $R^9$ being a linear or branched $C_1$-$C_6$-alkyl group,
$R^5$ is hydrogen or an aliphatic $C_1$-$C_{20}$-hydrocarbyl group optionally containing one or more heteroatoms from groups 14-16 of the periodic table;
$R^6$ is hydrogen or an aliphatic $C_1$-$C_{20}$-hydrocarbyl group optionally containing one or more heteroatoms from groups 14-16 of the periodic table; or
$R^5$ and $R^6$ can be taken together to form a 5 membered saturated carbon ring which is optionally substituted by n groups $R^{10}$, n being from 0 to 4;
each $R^{10}$ is same or different and may be a $C_1$-$C_{20}$-hydrocarbyl group, or a $C_1$-$C_{20}$-hydrocarbyl group optionally containing one or more heteroatoms belonging to groups 14-16 of the periodic table;
$R^7$ is H or a linear or branched $C_1$-$C_6$-alkyl group or an aryl or heteroaryl group having 6 to 20 carbon atoms optionally substituted by one to three groups $R^{11}$,
each $R^{11}$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group,

(ii) a co-catalyst system comprising a boron containing co-catalyst and/or an aluminoxane co-catalyst, and
(iii) a silica support.

The term "sigma-donor ligand" is well understood by the person skilled in the art, i.e. a group bound to the metal via a sigma bond. Thus the anionic ligands "X" can independently be halogen or be selected from the group consisting of R', OR', SiR'$_3$, OSiR'$_3$, $OSO_2CF_3$, OCOR', SR', NR'$_2$ or PR'$_2$ group wherein R' is independently hydrogen, a linear or branched, cyclic or acyclic, $C_1$ to $C_{20}$ alkyl, $C_2$ to $C_{20}$ alkenyl, $C_2$ to $C_{20}$ alkynyl, $C_3$ to $C_{12}$ cycloalkyl, $C_6$ to $C_{20}$ aryl, $C_7$ to $C_{20}$ arylalkyl, $C_7$ to $C_{20}$ alkylaryl, $C_8$ to $C_{20}$ arylalkenyl, in which the R' group can optionally contain one or more heteroatoms belonging to groups 14 to 16. In a preferred embodiment the anionic ligands "X" are identical and either halogen, like Cl, or methyl or benzyl.

A preferred monovalent anionic ligand is halogen, in particular chlorine (Cl).

Preferred metallocene complexes include:

rac-dimethylsilanediylbis[2-methyl-4-(3',5'-dimethylphenyl)-5-methoxy-6-tert-butylinden-1-yl] zirconium dichloride,
rac-anti-dimethylsilanediyl[2-methyl-4-(4'-tert-butylphenyl)-inden-1-yl][2-methyl-4- (4'-tertbutylphenyl)-5-methoxy-6-tert-butylinden-1-yl] zirconium dichloride,
rac-anti-dimethylsilanediyl[2-methyl-4-(4'-tert-butylphenyl)-inden-1-yl][2-methyl-4-phenyl-5-methoxy-6-tert-butylinden-1-yl] zirconium dichloride, rac-anti-dimethylsilanediyl[2-methyl-4-(3',5'-tert-butylphenyl)-1,5,6,7-tetrahydro-sindacen-1-yl][2-methyl-4-(3',5'-dimethyl-phenyl)-5-methoxy-6-tert-butylinden-1-yl] zirconium dichloride,
rac-anti-dimethylsilanediyl[2-methyl-4,8-bis-(4'-tert-butylphenyl)-1,5,6,7-tetrahydro-sindacen-1-yl][2-methyl-4-(3',5'-dimethyl-phenyl)-5-methoxy-6-tert-butylinden-1-yl] zirconium dichloride,
rac-anti-dimethylsilanediyl[2-methyl-4,8-bis-(3',5'-dimethylphenyl)-1,5,6,7-tetrahydro-s-indacen-1-yl] [2-methyl-4-(3',5'-dimethylphenyl)-5-methoxy-6-tert-butylinden-1-yl] zirconium dichloride,
rac-anti-dimethylsilanediyl[2-methyl-4,8-bis-(3',5'-dimethylphenyl)-1,5,6,7-tetrahydro-s-indacen-1-yl][2-methyl-4-(3',5'-5 ditert-butyl-phenyl)-5-methoxy-6-tert-butylinden-1-yl] zirconium dichloride.

Especially preferred is rac-anti-dimethylsilanediyl[2-methyl-4,8-bis-(3',5'-dimethylphenyl)-1,5,6,7-tetrahydro-s indacen-1-yl] [2-methyl-4-(3',5'-dimethylphenyl)-5-methoxy-6-tert-butylinden-1-yl] zirconium dichloride.

The ligands required to form the complexes and hence catalyst systems of the invention can be synthesised by any process and the skilled organic chemist would be able to devise various synthetic protocols for the manufacture of the necessary ligand materials. For Example WO2007/116034 discloses the necessary chemistry. Synthetic protocols can also generally be found in WO 2002/02576, WO 2011/135004, WO 2012/084961, WO 2012/001052, WO 2011/076780, WO 2015/158790 and WO 2018/122134. Especially reference is made to WO 2019/179959, in which the most preferred catalyst of the present invention is described.

Cocatalyst

To form an active catalytic species it is normally necessary to employ a cocatalyst as is well known in the art.

According to the present invention a co-catalyst system comprising a boron containing co-catalyst and/or an aluminoxane co-catalyst is used in combination with the above defined metallocene catalyst complex.

The aluminoxane co-catalyst can be one of formula (II):

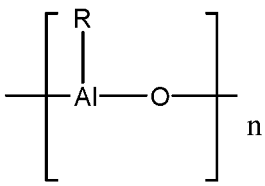

(II)

where n is usually from 6 to 20 and R has the meaning below.

Aluminoxanes are formed on partial hydrolysis of organoaluminum compounds, for example those of the formula $AlR_3$, $AlR_2Y$ and $Al_2R_3Y_3$ where R can be, for example, $C_1$-$C_{10}$ alkyl, preferably $C_1$-$C_5$ alkyl, or $C_3$-$C_{10}$ cycloalkyl, $C_7$-$C_{12}$ arylalkyl or alkylaryl and/or phenyl or naphthyl, and where Y can be hydrogen, halogen, preferably chlorine or bromine, or $C_1$-$C_{10}$ alkoxy, preferably methoxy or ethoxy. The resulting oxygen-containing aluminoxanes are not in general pure compounds but mixtures of oligomers of the formula (II).

The preferred aluminoxane is methylaluminoxane (MAO). Since the aluminoxanes used as co-catalysts according to the invention are not, owing to their mode of preparation, pure compounds, the molarity of aluminoxane solutions hereinafter is based on their aluminium content.

According to the present invention, also a boron containing co-catalyst can be used instead of the aluminoxane co-catalyst or the aluminoxane co-catalyst can be used in combination with a boron containing co-catalyst.

It will be appreciated by the person skilled in the art that where boron based co-catalysts are employed, it is normal to pre-alkylate the complex by reaction thereof with an aluminium alkyl compound, such as TIBA. This procedure is well known and any suitable aluminium alkyl, e.g. $Al(C_1-C_6\ alkyl)_3$ can be used. Preferred aluminium alkyl compounds are triethylaluminium, tri-isobutylaluminium, tri-isohexylaluminium, tri-n-octylaluminium and tri-isooctylaluminium.
Alternatively, when a borate co-catalyst is used, the metallocene catalyst complex is in its alkylated version, that is for example a dimethyl or dibenzyl metallocene catalyst complex can be used.
Boron based co-catalysts of interest include those of formula (III)

$BY_3$ (III)

wherein Y is the same or different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine. Preferred options are trifluoroborane, triphenylborane, tris(4-fluorophenyl)borane, tris(3,5-difluorophenyl)borane, tris(4-fluoromethylphenyl) borane, tris(2,4,6-trifluorophenyl)borane, tris(pentafluorophenyl)borane, tris(tolyl)borane, tris(3,5-dimethyl-phenyl)borane, tris(3,5-difluorophenyl)borane and/or tris (3,4,5-trifluorophenyl)borane.
Particular preference is given to tris(pentafluorophenyl)borane.
However it is preferred that borates are used, i.e. compounds containing a borate 3+ ion. Such ionic co-catalysts preferably contain a non-coordinating anion such as tetrakis(pentafluorophenyl)borate and tetraphenylborate. Suitable counterions are protonated amine or aniline derivatives such as methylammonium, anilinium, dimethylammonium, diethylammonium, N- methylanilinium, diphenylammonium, N,N-dimethylanilinium, trimethylammonium, triethylammonium, tri-n-butylammonium, methyldiphenylammonium, pyridinium, p-bromo-N,N-dimethylanilinium or p-nitro-N,N-dimethylanilinium.
It has been surprisingly found that certain boron co-catalysts are especially preferred. Preferred borates of use in the invention therefore comprise the trityl ion. Thus the use of N,N-dimethylammonium-tetrakispentafluorophenylborate and $Ph_3CB(PhF_5)_4$ and analogues therefore are especially favoured.
The preferred co-catalysts are aluminoxanes, more preferably methylaluminoxanes, combinations of aluminoxanes with Al-alkyls, boron or borate co-catalysts, and combination of aluminoxanes with boron-based co-catalysts.
The catalyst system of the invention is used in supported form. The particulate support material used is silica or a mixed oxide such as silica-alumina, in particular silica. The use of a silica support is preferred. The skilled practitioner is aware of the procedures required to support a metallocene catalyst.
In a preferred embodiment, the catalyst system corresponds to the ICS3 of WO 2020/239598 A1.
The process further comprises post reactor processing steps in which the polymer fractions are preferably separated from the polymerization mixture obtained from the last polymerization stage and blended in amounts of 5 to 50 wt.-%, preferably 10 to 45 wt.-%, more preferably 12 to 40 wt.-% of the heterophasic propylene copolymer (B) with 50 to 95 wt.-%, preferably 55 to 90 wt.-%, more preferably 60 to 88 wt.-% of the mixed-plastics polypropylene blend (A), optionally in the presence of other components such as further polymeric components and/or additives as described herein, to obtain the composition.
The blending step preferably is conducted by compounding the components in an extruded such as a twin-screw extruder using typical compounding conditions. The post reactor processing steps are well established in the art.
In one embodiment, the present invention is directed to a composition as described above that is obtainable, more preferably obtained, through the process as described herein. All preferable embodiments and fall back positions given for the composition above and below apply mutatis mutandis to the process of the invention.

Article

In another aspect, the present invention relates to an article comprising the composition as described above or below.
The article preferably is a moulded article, such as an injection moulded article, fiber or mineral reinforced composite.
The article can be an automotive article comprising the composition as described above or below.
The article can also be a packaging article, preferably a thin wall packaging article, such as plastics cups, pales and small containers including lids for the same, e.g. intended for food packaging comprising the composition as described above or below.
In one embodiment, the composition of the article can comprise fibers, such as glass fibers or carbon fibers. In case fibers are present in the composition of the article, the amount of fibers is in the range of from 5 to 40 wt%, based on the composition of the article.
In another embodiment, the composition of the article can comprise mineral fillers, such as talc, mica or

wollastonite. In case mineral fillers are present in the composition of the article, the amount of fillers is in the range of from 5 to 40 wt%, based on the composition of the article.

Use

In yet another aspect, the present invention relates to the use of the composition as described above or below for the production of an article.

Further, the present invention relates to the use of heterophasic propylene copolymer having

- a melt flow rate $MFR_2$ (230°C, 2.16 kg, ISO 1133) of 105 to 320 g/10min, preferably 107 to 300 g/10min, more preferably 110 to 280 g/10min;
- a soluble fraction (SF) content determined according to CRYSTEX QC analysis in the range of 10.0 to 35.0 wt.-%, preferably in the range of 11.0 to 32.5 wt.-%, more preferably in the range of 12.0 to 30.0 wt.-%, and
- an intrinsic viscosity of said soluble fraction (iV(SF)) as measured in decalin according to DIN ISO 1628/1 at 135°C of at least 2.0 dl/g, preferably in the range of 2.4 to 4.8 dl/g, more preferably in the range of 2.5 to 4.5 dl/g;

in a composition as described above or below for increasing melt flow rate $MFR_2$ (230°C, 2.16 kg, ISO1133) and the flexural modulus and reducing the VOC and FOG content of said composition.

All preferable embodiments and fall back positions given for the heterophasic propylene copolymer (B), the composition and/or the article above and below apply mutatis mutandis to the uses of the invention.

**Experimental Section**

The following Examples are included to demonstrate certain aspects and embodiments of the invention as described in the claims. It should be appreciated by those of skill in the art, however, that the following description is illustrative only and should not be taken in any way as a restriction of the invention.

1. Determination methods

**$MFR_2$ (230°C)** was measured according to ISO 1133 at 230°C and 2.16 kg load.

**CRYSTEX**

**Determination of Crystalline and soluble fractions and their respective properties (IV and Ethylene content)**

The crystalline (CF) and soluble fractions (SF) of the polypropylene (PP) compositions as well as the comonomer content and intrinsic viscosities of the respective fractions were analyzed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596)

The crystalline and amorphous fractions are separated through temperature cycles of dissolution at 160°C, crystallization at 40°C and re-dissolution in 1,2,4-trichlorobenzene at 160°C. Quantification of SF and CF and determination of ethylene content (C2) are achieved by means of an integrated infrared detector (IR4) and for the determination of the intrinsic viscosity (iV) an online 2-capillary viscometer is used.

The IR4 detector is a multiple wavelength detector measuring IR absorbance at two different bands ($CH_3$ stretching vibration (centred at app. 2960 $cm^{-1}$) and the CH stretching vibration (2700-3000 $cm^{-1}$) that are serving for the determination of the concentration and the Ethylene content in Ethylene-Propylene copolymers. The IR4 detector is calibrated with series of 8 EP copolymers with known Ethylene content in the range of 2 wt.-% to 69 wt.-% (determined by $^{13}C$-NMR) and each at various concentrations, in the range of 2 and 13mg/ml. To encounter for both features, concentration and ethylene content at the same time for various polymer concentrations expected during Crystex analyses the following calibration equations were applied:

$$Conc = a + b*Abs(CH) + c*(Abs(CH))^2 + d*Abs(CH_3) + e*(Abs(CH_3)^2 + f*Abs(CH)*Abs(CH_3) \quad \text{(Equation 1)}$$

$$CH_3/1000C = a + b*Abs(CH) + c* Abs(CH_3) + d * (Abs(CH_3)/Abs(CH)) + e * (Abs(CH_3)/Abs(CH))^2 \quad \text{(Equation 2)}$$

The constants a to e for equation 1 and a to f for equation 2 were determined by using least square regression analysis.

The $CH_3$/1000C is converted to the ethylene content in wt.-% using following relationship:

$$\text{wt.-\% (Ethylene in EP Copolymers)} = 100 - CH_3/1000TC * 0.3 \qquad \text{(Equation 3)}$$

Amounts of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%. The determined XS calibration is linear:

$$\text{wt.-\% XS} = 1{,}01 * \text{wt\% SF} \qquad \text{(Equation 4)}$$

Intrinsic viscosity (iV) of the parent EP copolymer and its soluble and crystalline fractions are determined with a use of an online 2-capillary viscometer and are correlated to corresponding iV's determined by standard method in decalin according to ISO 1628-3. Calibration is achieved with various EP PP copolymers with iV = 2-4 dL/g. The determined calibration curve is linear:

$$\text{iV (dL/g)} = a * \text{Vsp/c} \qquad \text{(Equation 5)}$$

The samples to be analyzed are weighed out in concentrations of 10mg/ml to 20mg/ml. To avoid injecting possible gels and/or polymers which do not dissolve in TCB at 160°C, like PET and PA, the weighed out sample was packed into a stainless steel mesh MW 0,077/D 0,05mmm.

After automated filling of the vial with 1,2,4-TCB containing 250 mg/l 2,6-tert-butyl-4-methylphenol (BHT) as antioxidant, the sample is dissolved at 160°C until complete dissolution is achieved, usually for 60 min, with constant stirring of 400rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the iV [dl/g] and the C2 [wt.-%] of the PP composition. During the second injection the soluble fraction (at low temperature) and the crystalline fraction (at high temperature) with the crystallization cycle are measured (wt.-% SF, wt.-% C2, iV).

**The xylene cold solubles (XCS, wt.-%)** were determined at 25°C according to ISO 16152; first edition; 2005-07-01.

**Intrinsic viscosity** was measured according to DIN ISO 1628/1, October 1999 (in Decalin at 135 °C).

**Quantification of microstructure by NMR spectroscopy - Ethylene content in HECO**

Quantitative nuclear-magnetic resonance (NMR) spectroscopy was used to quantify the comonomer content of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.
The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.
For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.
The mole percent comonomer incorporation was calculated from the mole fraction:

$$E\ [mol\%] = 100 * fE$$

The weight percent comonomer incorporation was calculated from the mole fraction:

$$E\ [wt\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.
**Flexural Modulus** was determined in 3-point-bending according to ISO 178 on injection molded specimens of 80 x 10 x 4 $mm^3$ injection molded according to EN ISO 1873-2.
**Charpy Notched Impact Strength** was determined according to ISO 179-1 eA at 23 °C and -20°C on injection molded specimens of 80 x 10 x 4 $mm^3$ injection molded according to EN ISO 1873-2.
**DSC analysis, melting temperature (Tm) and crystallization temperature (Tc):** measured with a TA Instrument Q2000 differential scanning calorimetry (DSC) on 5 to 7 mg samples. DSC is run according to ISO 11357 / part 3 / method C2 in a heat / cool /heat cycle with a scan rate of 10°C/min in the temperature range of -30°C to +225°C. Crystallization temperature and crystallization enthalpy (Hc) are determined from the cooling step, while melting temperature and melting enthalpy (Hm) are determined from the second heating step.
**VOC values and FOG values** were measured according to VDA 278 (October 2011; Thermal Desorption Analysis of Organic Emissions for the Characterization of Non-Metallic Materials for Automobiles, VDA Verband der Automobilindustrie) after sample preparation of injection moulding plaques according to EN ISO 19069-2:2016. These plaques were packed in aluminium-composite foils immediately after production and the foils were sealed.
According to the VDA 278 October 2011 the VOC value is defined as "the total of the readily volatile to medium volatile substances. It is calculated as toluene equivalent. The method described in this recommendation allows substances in the boiling / elution range up to n-pentacosane ($C_{25}$) to be determined and analyzed." The FOG value is defined as "the total of substances with low volatility, which elute from the retention time of n-tetradecane (inclusive)". It is calculated as hexadecane equivalent. Substances in the boiling range of n-alkanes "$C_{14}$" to "$C_{32}$" are determined and analysed.
**Fogging** has been determined according to DIN75201, Part B on 2 mm thick compression molded plaques. Thermal treatment was performed at 100 °C for 16 hours. Fogging is expressed as a difference in weight before and after treatment.

1. Examples

• Heterophasic propylene copolymers 1 and 2 (HECO1 and HECO2)

The catalyst used in the polymerization process for the heterophasic propylene copolymers 1 (HECO1) and 2 (HECO2) was *Anti*-dimethylsilanediyl[2-methyl-4,8-di(3,5-dimethylphenyl)-1,5,6,7-tetrahydro-*s*-indacen-1-yl][2-methyl-4-(3,5-dimethylphenyl)-5-methoxy-6-*tert*-butylinden-1-yl] zirconium dichloride as disclosed in WO 2019/179959 A1 as MC-2. The supported metallocene catalyst was produced analogously to IE2 in WO 2019/179959 A1.

HECO1 and HECO2 were prepared in a Borstar PP pilot unit with sequential process comprising a prepolymerization reactor, a loop reactor and two gas phase reactors. The reaction conditions are summarized in Table 1.

**Table 1:** Preparation of HECO1 and HECO2

| | HECO1 | HECO2 |
|---|---|---|
| **Prepolymerization reactor** | | |
| Temp. (°C) | 20 | 20 |
| Press. (bar(g)) | 55 | 55 |
| H2/C3 (mol/kmol) | 0.07 | 0.07 |
| Polymer residence time (h) | 0.3 | 0.3 |
| **Loop reactor** | | |
| Temp. (°C) | 75 | 75 |
| Press. (bar(g)) | 53 | 53 |
| H2/C3 ratio (mol/kmol) | 1.31 | 0.80 |
| XCS (wt.-%) | 1.90 | 1.10 |
| $MFR_2$ (g/10 min) | 9470 | 1378 |
| Productivity (kg PP/g cat) | 7.1 | 7.6 |
| Polymer residence time (h) | 0.36 | 0.36 |
| Polymer Split - prepol+loop (wt.-%) | 49 | 49 |
| **1$^{st}$ GPR** | | |
| Temp. (°C) | 80 | 80 |
| Press. (bar(g)) | 25 | 25 |
| H2/C3 ratio (mol/kmol) | 4.64 | 3.00 |
| XCS (wt.-%) | 0.20 | 0.70 |
| $MFR_2$ (g/10 min) | 7170 | 1779 |
| Productivity (kg PP/g cat) | 5.0 | 5.2 |
| Polymer residence time (h) | 1.1 | 1.0 |
| Polymer Split - 1$^{st}$ GPR (wt.-%) | 34 | 31 |
| **2$^{nd}$ GPR** | | |
| Temp. (°C) | 70 | 70 |
| Press. (bar(g)) | 22 | 22 |
| C2/C3 ratio (mol/kmol) | 888 | 854 |
| H2/C2 ratio (mol/kmol) | 1.59 | 2.00 |
| Productivity (kg PP/g cat) | 2.50 | 2.65 |
| Polymer residence time (h) | 1.5 | 1.8 |
| Polymer Split - 2$^{nd}$ GPR (wt.-%) | 17 | 20 |
| **Powder Properties** | | |
| XCS (wt.-%) | 15.5 | 12.4 |

(continued)

| Powder Properties | | |
|---|---|---|
| C2(XCS) (wt.-%) | 21.8 | 23.0 |
| iV(XCS) (dl/g) | 3.5 | 2.5 |

For stabilization, the HECO1 and HECO2 were compounded each with 1500 ppm of Irganox B215 (a synergistic 2:1 blend of antioxidants Irgafos 168 (tris(2,4-ditert-butylphenyl)phosphite, CAS No: 31570-04-4) and Irganox 1010 (pentaerythritol tetrakis[3-[3,5-di-tert-butyl-4-hydroxyphenyl]propionate], CAS No: 6683-19-8), commercially available from BASF SE) and 500 ppm of calcium stearate (CAS No: 1592-23-0, commercially available from Bärlocher GmbH under the trade name CEASIT-1).

HECO3 used for comparative example CE3 is a copolymer based on a Ziegler-Natta type catalyst, identical to HECO3 of WO 2021144401 A1.

**Table 2:** Properties of HECO1, HECO2 and HECO3

| | | HECO1 | HECO2 | HECO3 |
|---|---|---|---|---|
| $MFR_2$ | g/10 min | 190 | 150 | 22 |
| C2 | wt.-% | 3.8 | 2.6 | 4.5 |
| iV | dl/g | 1.16 | 1.17 | 1.5 |
| SF | wt.-% | 16.9 | 12.1 | 16.0 |
| C2(SF) | wt.-% | 19.8 | 22.7 | 17.0 |
| iV(SF) | dl/g | 3.03 | 2.68 | 1.0 |
| CF | wt.-% | 83.1 | 87.9 | 84.0 |
| C2(CF) | wt.-% | 0.5 | 0 | 2.1 |
| iV(CF) | dl/g | 0.77 | 0.96 | 2.1 |
| iV(SF)/iV(CF) | | 3.94 | 2.79 | 0.48 |
| Tm | °C | 154 | 155 | 165 |
| Tc | °C | 119 | 118 | 116 |
| Hm | J/g | 88 | 93 | 87 |
| Flexural modulus (FM) | MPa | 1090 | 1248 | 1175 |
| Charpy NIS, 23°C (CNIS) | $kg/m^2$ | 3.2 | 4.3 | 3.5 |
| VOC | µg/g | 25 | 6 | n.d. |
| FOG | µg/g | 201 | 53 | n.d. |
| FM - (1550 - 33.4 * SF) | MPa | 104 | 102 | 159 |
| CNIS - (10.0 - 0.05 * $MFR_2$) | $kg/m^2$ | 2.7 | 1.8 | -5.4 |

• Propylene homopolymer 2 (PPH2)

PPH2 is a propylene homopolymer having a melt flow rate (230°C, 2.16 kg, ISO 1133) of 450 g/10 min, a flexural modulus of 1519 MPa, a VOC content of 267 µg/g and a FOG content of 629 µg/g, commercially available as HL504FB from Borealis AG.

• Polypropylene/polyethylene blend

Table 3 shows the properties of the polypropylene / polyethylene blends (A) as used for the evaluation. As these compositions come from a mechanical recycling process, the properties are indicated as ranges.

• Antioxidant masterbatch

Irganox B215 (a synergistic 2:1 blend of antioxidants Irgafos 168 (tris(2,4-ditert-butylphenyl)phosphite, CAS No: 31570-04-4) and Irganox 1010 (pentaerythritol tetrakis[3-[3,5-di-tert-butyl-4-hydroxyphenyl]propionate], CAS No: 6683-19-8), commercially available from BASF SE) was blended with propylene homopolmyer HC001, commercially available from Borealis AG to form an antioxidant masterbatch. In Table 4 the amounts of Irganox B215 and HC001 are given separately.

**Table 3:** Properties of Polypropylene / Polyethylene Blends Mixtures (Blend A)

| | **Blend A** |
|---|---|
| PP / PE ratio | 55 / 45 |
| C2 (Blend A, total), wt.-% | 44.9 |
| Recycling origin | Yes, households |
| limonene | > 0.1 ppm |
| $MFR_2$ (230°C, ISO1133), g/10min | 5.7 |
| CF (CRYSTEX), wt% | 90.9 |
| iV (CF), dl/g | 1.9 |
| C2 (CF), wt% | 45.5 |
| SF (CRYSTEX), wt% | 9.1 |
| iV (SF), dl/g | 1.4 |
| C2 (SF), wt% | 46.0 |
| Tensile modulus, ISO 527-2, MPa | 900 |
| Charpy NIS + 23 °C,ISO 179 1eA, kJ/$m^2$ | 6.5 |

The final compositions were compounded in a Coperion ZSK40 twin-screw extruder at 220°C using the polymers together with the antioxidant masterbatch. The compositions of the examples are shown in Table 4.

**Table 4:** compositions of the examples

| | | **CE1** | **CE2** | **CE3** | **IE1** | **IE2** | **IE3** |
|---|---|---|---|---|---|---|---|
| Blend A | wt.-% | 99.0 | 69.0 | 69.0 | 69.0 | 84.0 | 69.0 |
| HECO1 | wt.-% | - | - | - | 30.0 | 15.0 | - |
| HECO2 | wt.-% | - | - | - | - | - | 30.0 |
| HECO3 | wt.-% | - | - | 30.0 | - | - | - |
| PPH2 | wt.-% | - | 30.0 | - | - | - | - |
| Irganox B215 | wt.-% | 0.2 | 0.2 | 0.2 | 0.2 | 0.2 | 0.2 |
| HC001 | wt.-% | 0.8 | 0.8 | 0.8 | 0.8 | 0.8 | 0.8 |

Table 5 shows the properties of the examples.

**Table 5:** Properties of the examples

| | | **CE1** | **CE2** | **CE3** | **IE1** | **IE2** | **IE3** |
|---|---|---|---|---|---|---|---|
| $MFR_2$ | g/10 min | 5.7 | 24 | 8.5 | 18 | 10 | 16 |
| Flexural modulus | MPa | 866 | 1064 | 922 | 924 | 901 | 866 |
| Charpy NIS, 23°C | kg/$m^2$ | 6.5 | 3.6 | 6.6 | 7.0 | 6.5 | 6.6 |
| Charpy NIS, -20°C | kg/$m^3$ | 2.1 | 1.6 | 2.8 | 2.0 | 2.0 | 2.2 |

(continued)

| | | CE1 | CE2 | CE3 | IE1 | IE2 | IE3 |
|---|---|---|---|---|---|---|---|
| VOC | μg/g | 88 | 169 | 175 | 52 | 66 | 88 |
| FOG | μg/g | 973 | 946 | 986 | 783 | 870 | 973 |
| Fogging | mg | 4.32 | 3.93 | 4.42 | 3.26 | 3.75 | 4.30 |

It can be seen that the compositions according to the invention show improved impact properties, also at low temperatures, sufficient mechanical properties and a low amount of impurities in form of VOC, FOG and fogging. The compositions of the invention thus qualify for moulded articles for packaging purposes thereby comprising mixed plastics polypropylene blends obtained from post-consumer waste in amounts of up to 84 wt.-%.

## Claims

1. A composition obtainable by blending components (A) and (B)

    (A) 50 to 95 wt.-%, preferably 55 to 90 wt.-%, more preferably 60 to 88 wt.-% of a mixed-plastics polypropylene/polyethylene blend; and
    (B) 5 to 50 wt.-%, preferably 10 to 45 wt.-%, more preferably 12 to 40 wt.-% of a heterophasic propylene copolymer; whereby all percentages refer to the total composition, and whereby

    the mixed-plastics polypropylene/polyethylene blend (A) has

    - a crystalline fraction (CF) content determined according to CRYSTEX QC analysis in the range from 85.0 to 96.0 wt.-%, preferably in the range from 86.5 to 95.5 wt.-%, and
    - a soluble fraction (SF) content determined according to CRYSTEX QC analysis in the range from 4.0 to 15.0 wt.-%, preferably in the range from 4.5 to 13.5 wt.-%, whereby
    - said crystalline fraction (CF) has an ethylene content (C2(CF)), as determined by FT-IR spectroscopy calibrated by quantitative $^{13}$C-NMR spectroscopy, in the range from 11.0 to 55.0 wt.-%, preferably in the range of 20.0 to 49.5 wt.-%; and
    - said soluble fraction (SF) has an intrinsic viscosity (iV(SF)) in the range from 0.9 to 2.1 dl/g, preferably in the range of 1.0 to 2.0 dl/g;

    the heterophasic propylene copolymer (B) comprises a matrix phase and an elastomer phase dispersed therein and has

    - a melt flow rate $MFR_2$ (230°C, 2.16 kg, ISO 1133) of 105 to 320 g/10min, preferably 107 to 300 g/10min, more preferably 110 to 280 g/10min;
    - a soluble fraction (SF) content determined according to CRYSTEX QC analysis in the range of 10.0 to 35.0 wt.-%, preferably in the range of 11.0 to 32.5 wt.-%, more preferably in the range of 12.0 to 30.0 wt.-%, and
    - an intrinsic viscosity of said soluble fraction (iV(SF)) as measured in decalin according to DIN ISO 1628/1 at 135°C of at least 2.0 dl/g, preferably in the range of 2.3 to 4.5 dl/g, more preferably in the range of 2.5 to 4.3 dl/g;

    the composition has

    - a melt flow rate $MFR_2$ (230°C, 2.16 kg, ISO 1133) of at least 9.0 g/10min, preferably 9.5 to 100 g/10min, more preferably 10.0 to 75 g/10min.

2. The composition according to claim 1 having a flexural modulus (FM) in the range of 800 to 1300 MPa, preferably in the range of 850 to 1200 MPa, more preferably in the range of 865 to 1050 MPa, determined according to ISO 178 on injection moulding test specimen (80 x 10 x 4 $mm^3$) as produced according to EN ISO 1873-2.

3. The composition according to claims 1 or 2 having a Charpy notched impact strength at 23°C in the range of 5.0 to 25.0 $kJ/m^2$, preferably in the range of 5.5 to 20.0 $kJ/m^2$, determined according to ISO 179/eA on injection moulding test

specimen (80 x 10 x 4 $mm^3$) as produced according to EN ISO 1873-2.

**4.** The composition according to any one of claims 1 to 3 having a Charpy notched impact strength at 23°C, which meets the following in-equation in relation its melt flow rate $MFR_2$ (230°C, 2.16 kg, ISO 1133)

$$CNIS,\ 23°C\ [kJ/m^2] > 7.8\ [kJ/m^2] - 0.17\ [kJ/m^2 / g/10\ min] \cdot MFR_2\ [g/10\ min]$$

with
CNIS, 23°C being the Charpy notched impact strength at 23°C of the composition, determined according to ISO 179/eA on injection moulding test specimen (80 x 10 x 4 $mm^3$) as produced according to EN ISO 1873-2, and $MFR_2$ being the melt flow rate $MFR_2$ (230°C, 2.16 kg, ISO 1133) of the composition.

**5.** The composition according to any one of claims 1 to 4 having a Charpy notched impact strength at -20°C in the range of 1.7 to 5.0 $kJ/m^2$, preferably in the range of 1.9 to 4.0 $kJ/m^2$, determined according to ISO 179/eA on injection moulding test specimen (80 x 10 x 4 $mm^3$) as produced according to EN ISO 1873-2.

**6.** The composition according to any one of claims 1 to 5 having one or more, preferably all of the following properties:

- a content of volatile organic compounds (VOC) of not more than 100 μg/g, preferably in the range of 5 to 95 μg/g, more preferably in the range of 10 to 90 μg/g, determined according to VDA 278; and/or
- a FOG content of not more than 1100 μg/g, preferably in the range of 50 to 1050 μg/g, more preferably in the range of 80 to 1000 μg/g, determined according to VDA 278; and/or
- an amount of fogging of not more than 5.0 mg, preferably in the range of 0.5 to 4.5 mg, determined according to DIN75201, Part B on 2 mm thick compression molded plaques.

**7.** The composition according to any one of claims 1 to 6 comprising additional polymeric components in an amount of up to 5 wt.-%, preferably of up to 2 wt.- %, more preferably in an amount of 0 wt.-%.

**8.** The composition according to any one of claims 1 to 7, wherein the mixed-plastics polypropylene/polyethylene blend (A) has one or more, preferably all of the following properties:

- an intrinsic viscosity of the crystalline fraction (iV(CF)), as measured in decalin according to DIN ISO 1628/1 at 135°C, in the range from 1.0 to below 2.6 dl/g, more preferably in the range from 1.2 to 2.5 dl/g;
- an ethylene content of the soluble fraction (C2(SF)), as determined by FT-IR spectroscopy calibrated by quantitative $^{13}C$-NMR spectroscopy, in the range from 20.0 to 55.0 wt.-%, preferably in the range from 22.0 to 50.0 wt.-%;
- a melt flow rate $MFR_2$ (230°C, 2.16 kg, ISO1133) of 5.0 to 50 g/10min, preferably of 5.2 to 45 g/10min, more preferably of 5.4 to 40 g/10min;
- units derived from ethylene in an amount of from 5.0 to 50.0 wt.-%, more preferably from 10.0 to 48.5 wt.-%, still more preferably from 25.0 to 47.0 wt.-%;
- units derived from propylene in an amount of from 50.0 to 95.0 wt.-%, more preferably from 51.5 to 90.0 wt.-%, still more preferably from 53.0 to 75.0 wt.-%;
- a limonene content as determined by using solid phase microextraction (HS-SPME-GC-MS): 0.1 to 50 ppm; and/or
- a tensile modulus of from 800 to 1400 MPa, preferably from 850 to 1200 MPa and/or
- a Charpy notched impact strength at 23°C (CNIS, 23°C) of from 4.0 to 8.5 $kJ/m^2$, preferably from 5.0 to 8.0 $kJ/m^2$; and/or
- a Charpy notched impact strength at -20°C (CNIS, -20°C) of from 1.0 to 4.5 $kJ/m^2$, preferably from 1.5 to 4.0 $kJ/m^2$.

**9.** The composition according to any one of claims 1 to 8, wherein the heterophasic propylene copolymer (B) has one or more, preferably all of the following properties:

- a crystalline fraction (CF), determined according to CRYSTEX QC analysis in an amount in the range of 65.0 to 90.0 wt.-%, preferably in the range of 67.5 to 89.0 wt.-%, more preferably in the range of 70.0 to 88.0 wt.-%, based on the total weight of the heterophasic propylene copolymer (B);
- an intrinsic viscosity of the crystalline fraction (iV(CF)) of not more than 1.2 dl/g, preferably in the range of 0.4 to

1.1 dl/g;
• an ethylene content of the crystalline fraction (C2(CF)) of not more than 1.0 wt.-%, preferably in the range of 0 to 0.9 wt.-%, based on the total weight of the crystalline fraction (CF), as determined by FT-IR spectroscopy calibrated by quantitative $^{13}C$-NMR spectroscopy;
• an ethylene content of the soluble fraction (C2(SF)) of 14.0 to 29.0 wt.-%, preferably in the range of 17.0 to 26.0 wt.-%, more preferably in the range of 19.0 to 24.0 wt.-%, based on the total weight of the soluble fraction (SF), as determined by FT-IR spectroscopy calibrated by quantitative $^{13}C$-NMR spectroscopy; and/or
• a flexural modulus in the range of 800 to 1500 MPa, preferably in the range of 850 to 1450 MPa, determined according to ISO 178 on injection moulded test specimen (80 x 10 x 4 $mm^3$) as produced according to EN ISO 1873-2;
• a total ethylene content in the range of 2.0 to 5.5 wt.-%, preferably in the range of 2.5 to 5.0 wt.-%, based on the total weight of the heterophasic propylene copolymer (B), as determined by FT-IR spectroscopy calibrated by quantitative $^{13}C$-NMR spectroscopy;
• a melting temperature in the range of 150 to 162°C, preferably in the range of 152 to 160°C, determined by DSC according to ISO 3146 (part 3, method C2);
• a crystallization temperature in the range of 110 to 130°C, preferably in the range of 115 to 125°C, determined by DSC according to ISO 3146 (part 3, method C2);
• a Charpy notched impact strength at 23°C in the range of 2.5 to 15.0 $kJ/m^2$, preferably in the range of 3.0 to 12.0 $kJ/m^2$, determined according to ISO 179/eA on injection moulded test specimen (80 x 10 x 4 $mm^3$) as produced according to EN ISO 1873-2;
• a content of volatile organic compounds (VOC) of not more than 50 μg/g, preferably not more than 40 μg/g, more preferably not more than 35 μg/g, determined according to VDA 278; and/or
• a FOG content of not more than 300 μg/g, preferably not more than 250 μg/g, more preferably not more than 225 μg/g, determined according to VDA 278.

**10.** A process for producing the composition according to any one of claims 1 to 9 comprising the steps of:

a) Polymerizing propylene in the presence of a single-site catalyst system in a first polymerization reactor for producing a first propylene polymer fraction;
b) Transferring a polymerization mixture comprising the single site catalyst system and the first propylene polymer fraction from the first polymerization reactor to a second polymerization reactor;
c) Polymerizing propylene in the presence of the single-site catalyst system in the second polymerization reactor for producing a second propylene polymer fraction;
d) Transferring a polymerization mixture comprising the single site catalyst system and the first and second propylene polymer fractions from the second polymerization reactor to a third polymerization reactor;
e) Polymerizing propylene and ethylene in the presence of a single-site catalyst system in the third polymerization reactor for producing a third propylene-ethylene copolymer fraction;
f) Withdrawing a polymerization mixture comprising the single site catalyst system, the first and second propylene polymer fractions and the third propylene-ethylene copolymer fraction from the third polymerization reactor; and
g) Obtaining the heterophasic propylene copolymer (B) comprising the first and second propylene polymer fractions and the third propylene-ethylene copolymer fraction;
h) Blending 5 to 50 wt.-%, preferably 10 to 45 wt.-%, more preferably 12 to 40 wt.-% of the heterophasic propylene copolymer (B) with 50 to 95 wt.-%, preferably 55 to 90 wt.-%, more preferably 60 to 88 wt.-% of the mixed-plastics polypropylene/polyethylene blend (A).

**11.** The process according to claim 10, wherein the single-site catalyst system (i) comprises a metallocene complex of the general formula (I)

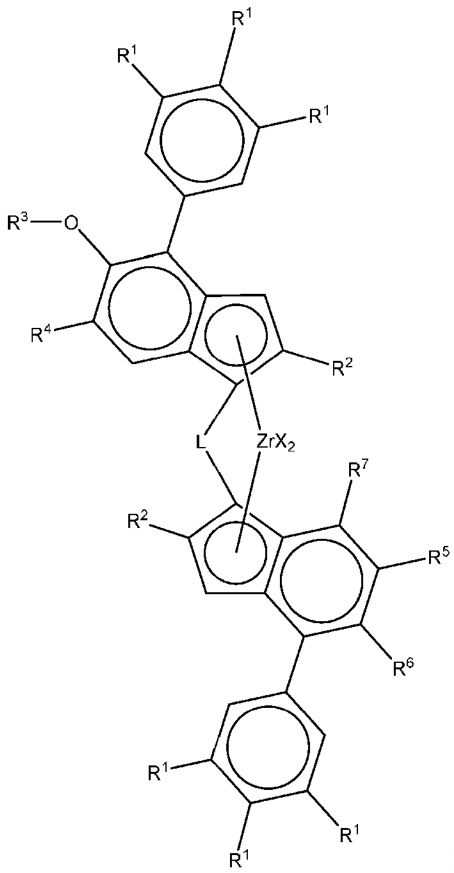

Formula (I)

wherein

each X independently is a sigma-donor ligand,
L is a divalent bridge selected from $-R'_2C-$, $-R'_2C-CR'_2-$, $-R'_2Si-$, $-R'_2Si-SiR'_2-$,$-R'_2Ge-$, wherein each R' is independently a hydrogen atom or a $C_1$-$C_{20}$-hydrocarbyl group optionally containing one or more heteroatoms from groups 14-16 of the periodic table or fluorine atoms, or optionally two R' groups taken together can form a ring,
each $R^1$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group, and optionally two adjacent $R^1$ groups can be part of a ring including the phenyl carbons to which they are bonded,
each $R^2$ independently are the same or can be different and are a $CH_2$-$R^8$ group, with $R^8$ being H or linear or branched $C_{1-6}$-alkyl group, $C_{3-8}$-cycloalkyl group, $C_{6-10}$-aryl group,
$R^3$ is a linear or branched $C_1$-$C_6$-alkyl group, $C_{7-20}$-arylalkyl, $C_{7-20}$-alkylaryl group or $C_6$-$C_{20}$-aryl group,
$R^4$ is a $C(R^9)_3$ group, with $R^9$ being a linear or branched $C_1$-$C_6$-alkyl group, $R^5$ is hydrogen or an aliphatic $C_1$-$C_{20}$-hydrocarbyl group optionally containing one or more heteroatoms from groups 14-16 of the periodic table;
$R^6$ is hydrogen or an aliphatic $C_1$-$C_{20}$-hydrocarbyl group optionally containing one or more heteroatoms from groups 14-16 of the periodic table; or
$R^5$ and $R^6$ can be taken together to form a 5 membered saturated carbon ring which is optionally substituted by n groups $R^{10}$, n being from 0 to 4;
each $R^{10}$ is same or different and may be a $C_1$-$C_{20}$-hydrocarbyl group, or a $C_1$-$C_{20}$-hydrocarbyl group optionally containing one or more heteroatoms belonging to groups 14-16 of the periodic table;
$R^7$ is H or a linear or branched $C_1$-$C_6$-alkyl group or an aryl or heteroaryl group having 6 to 20 carbon atoms optionally substituted by one to three groups $R^{11}$, each $R^{11}$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group,
(ii) an aluminoxane co-catalyst, and
(iii) a silica support.

**12.** An article comprising the composition according to any one of claims 1 to 11.

**13.** The article according to claim 12 being an automotive article or a packaging article.

**14.** Use of the polypropylene composition according to any one of claims 1 to 11 as compound base for the production of an article.

**15.** Use of a heterophasic propylene copolymer having

- a melt flow rate $MFR_2$ (230°C, 2.16 kg, ISO 1133) of 105 to 320 g/10min, preferably 107 to 300 g/10min, more preferably 110 to 280 g/10min;
- a soluble fraction (SF) content determined according to CRYSTEX QC analysis in the range of 10.0 to 35.0 wt.-%, preferably in the range of 11.0 to 32.5 wt.-%, more preferably in the range of 12.0 to 30.0 wt.-%, and
- an intrinsic viscosity of said soluble fraction (iV(SF)) as measured in decalin according to DIN ISO 1628/1 at 135°C of at least 2.0 dl/g, preferably in the range of 2.3 to 4.5 dl/g, more preferably in the range of 2.5 to 4.3 dl/g;

in a composition according to any one of claims 1 to 11 for increasing melt flow rate $MFR_2$ (230°C, 2.16 kg, ISO1133) and the flexural modulus and reducing the VOC and FOG content of said composition.

## Patentansprüche

**1.** Eine Zusammensetzung, die durch Mischen der Komponenten (A) und (B) erhältlich ist

(A) 50 bis 95 Gew.-%, vorzugsweise 55 bis 90 Gew.-%, noch bevorzugter 60 bis 88 Gew.-% einer Polypropylen/Polyethylen Mischkunststoffmischung; und
(B) 5 bis 50 Gew.-%, vorzugsweise 10 bis 45 Gew.-%, noch bevorzugter 12 bis 40 Gew.-% eines heterophasischen Propylen-Copolymers; wobei sich alle Prozentangaben auf die Gesamtzusammensetzung beziehen und wobei

die Polypropylen/Polyethylen Mischkunststoffmischung (A) Folgendes aufweist:

- einen Gehalt an kristalliner Fraktion (CF), bestimmt gemäß CRYSTEX QC-Analyse, im Bereich von 85,0 bis 96,0 Gew.-%, vorzugsweise im Bereich von 86,5 bis 95,5 Gew.-%, und
- einen Gehalt an löslicher Fraktion (SF), bestimmt gemäß CRYSTEX QC-Analyse, im Bereich von 4,0 bis 15,0 Gew.-%, vorzugsweise im Bereich von 4,5 bis 13,5 Gew.-%, wobei
- die kristalline Fraktion (CF) einen Ethylengehalt (C2(CF)) aufweist, der mittels FT-IR-Spektroskopie, kalibriert durch quantitative $^{13}C$-NMR-Spektroskopie, bestimmt wurde und im Bereich von 11,0 bis 55,0 Gew.-%, vorzugsweise im Bereich von 20,0 bis 49,5 Gew.-%, liegt; und
- die lösliche Fraktion (SF) eine intrinsische Viskosität (iV(SF)) im Bereich von 0,9 bis 2,1 dl/g, vorzugsweise im Bereich von 1,0 bis 2,0 dl/g, aufweist;

das heterophasische Propylen-Copolymer (B) eine Matrixphase und eine darin dispergierte Elastomerphase umfasst und Folgendes aufweist:

- eine Schmelzflussrate $MFR_2$ (230 °C, 2,16 kg, ISO 1133) von 105 bis 320 g/10 min, vorzugsweise von 107 bis 300 g/10 min, noch bevorzugter von 110 bis 280 g/10 min;
- einen Gehalt an löslicher Fraktion (SF), bestimmt gemäß CRYSTEX QC-Analyse, im Bereich von 10,0 bis 35,0 Gew.-%, vorzugsweise im Bereich von 11,0 bis 32,5 Gew.-%, noch bevorzugter im Bereich von 12,0 bis 30,0 Gew.-%, und
- eine intrinsische Viskosität der genannten löslichen Fraktion (iV(SF)), gemessen in Decalin gemäß DIN ISO 1628/1 bei 135 °C, von mindestens 2,0 dl/g, vorzugsweise im Bereich von 2,3 bis 4,5 dl/g, noch bevorzugter im Bereich von 2,5 bis 4,3 dl/g;

die Zusammensetzung Folgendes aufweist:

- eine Schmelzflussrate $MFR_2$ (230 °C, 2,16 kg, ISO 1133) von mindestens 9,0 g/10 min, vorzugsweise 9,5 bis 100 g/10 min, noch bevorzugter 10,0 bis 75 g/10 min.

**2.** Die Zusammensetzung gemäß Anspruch 1 mit einem Biegemodul (FM) im Bereich von 800 bis 1300 MPa,

vorzugsweise im Bereich von 850 bis 1200 MPa, noch bevorzugter im Bereich von 865 bis 1050 MPa, bestimmt gemäß ISO 178 an einem Spritzgussprüfkörper (80 x 10 x 4 $mm^3$), hergestellt gemäß EN ISO 1873-2.

**3.** Die Zusammensetzung gemäß Anspruch 1 oder 2 mit einer Charpy-Kerbschlagzähigkeit bei 23 °C im Bereich von 5,0 bis 25,0 kJ/$m^2$, vorzugsweise im Bereich von 5,5 bis 20,0 kJ/$m^2$, bestimmt gemäß ISO 179/eA an einem Spritzgussprüfkörper (80 × 10 × 4 $mm^3$), hergestellt gemäß EN ISO 1873-2.

**4.** Die Zusammensetzung gemäß einem der Ansprüche 1 bis 3 mit einer Charpy-Kerbschlagzähigkeit bei 23 °C, die folgende Ungleichen in Bezug auf ihren Schmelzindex $MFR_2$ (230 °C, 2,16 kg, ISO 1133) erfüllt:

$$\text{CNIS, 23 °C [kJ/m}^2\text{]} > 7{,}8\ \text{[kJ/m}^2\text{]} - 0{,}17\ \text{[kJ/m}^2\text{ / g/10 min]} \cdot \text{MFR}_2\ \text{[g/10 min]}$$

wobei

CNIS, 23 °C die Charpy-Kerbschlagzähigkeit bei 23 °C der Zusammensetzung ist, bestimmt gemäß ISO 179/eA an einem Spritzgussprüfkörper (80 × 10 × 4 $mm^3$), hergestellt gemäß EN ISO 1873-2, und
$MFR_2$ die Schmelzflussrate $MFR_2$ (230 °C, 2,16 kg, ISO 1133) der Zusammensetzung ist.

**5.** Die Zusammensetzung gemäß einem der Ansprüche 1 bis 4 mit einer Charpy-Kerbschlagzähigkeit bei -20 °C im Bereich von 1,7 bis 5,0 kJ/$m^2$, vorzugsweise im Bereich von 1,9 bis 4,0 kJ/$m^2$, bestimmt gemäß ISO 179/eA an einem Spritzgussprüfkörper (80 × 10 × 4 $mm^3$), hergestellt gemäß EN ISO 1873-2.

**6.** Die Zusammensetzung gemäß einem der Ansprüche 1 bis 5, die eine oder mehrere, vorzugsweise alle der folgenden Eigenschaften aufweist:

- einen Gehalt an flüchtigen organischen Verbindungen (VOC) von nicht mehr als 100 µg/g, vorzugsweise im Bereich von 5 bis 95 µg/g, noch bevorzugter im Bereich von 10 bis 90 µg/g, bestimmt gemäß VDA 278; und/oder
- einen FOG-Gehalt von nicht mehr als 1100 µg/g, vorzugsweise im Bereich von 50 bis 1050 µg/g, noch bevorzugter im Bereich von 80 bis 1000 µg/g, bestimmt nach VDA 278; und/oder
- eine Trübungsmenge von nicht mehr als 5,0 mg, vorzugsweise im Bereich von 0,5 bis 4,5 mg, bestimmt gemäß DIN 75201, Teil B, an 2 mm dicken, formgepressten Platten.

**7.** Die Zusammensetzung gemäß einem der Ansprüche 1 bis 6, die zusätzliche polymere Komponenten in einer Menge von bis zu 5 Gew.-%, vorzugsweise von bis zu 2 Gew.-%, noch bevorzugter in einer Menge von 0 Gew.-% umfasst.

**8.** Die Zusammensetzung gemäß einem der Ansprüche 1 bis 7, wobei das Polypropylen/Polyethylen Mischkunststoffmischung (A) eine oder mehrere, vorzugsweise alle der folgenden Eigenschaften aufweist:

- eine intrinsische Viskosität der kristallinen Fraktion (iV(CF)), gemessen in Decalin gemäß DIN ISO 1628/1 bei 135 °C, im Bereich von 1,0 bis unter 2,6 dl/g, vorzugsweise im Bereich von 1,2 bis 2,5 dl/g;
- einen Ethylengehalt der löslichen Fraktion (C2(SF)), bestimmt durch FT-IR-Spektroskopie, kalibriert durch quantitative $^{13}C$-NMR-Spektroskopie, im Bereich von 20,0 bis 55,0 Gew.-%, vorzugsweise im Bereich von 22,0 bis 50,0 Gew.-%;
- eine Schmelzflussrate $MFR_2$ (230 °C, 2,16 kg, ISO 1133) von 5,0 bis 50 g/10 min, vorzugsweise von 5,2 bis 45 g/10 min, noch bevorzugter von 5,4 bis 40 g/10 min;
- von Ethylen abgeleitete Einheiten in einer Menge von 5,0 bis 50,0 Gew.-%, vorzugsweise von 10,0 bis 48,5 Gew.-%, noch bevorzugter von 25,0 bis 47,0 Gew.-%;
- von Propylen abgeleitete Einheiten in einer Menge von 50,0 bis 95,0 Gew.-%, vorzugsweise von 51,5 bis 90,0 Gew.-%, noch bevorzugter von 53,0 bis 75,0 Gew.-%;
- einen Limonengehalt, bestimmt mittels Festphasen-Mikroextraktion (HS-SPME-GC-MS) von 0,1 bis 50 ppm; und/oder
- einen Zugmodul von 800 bis 1400 MPa, vorzugsweise von 850 bis 1200 MPa und/oder
- eine Charpy-Kerbschlagzähigkeit bei 23 °C (CNIS, 23 °C) von 4,0 bis 8,5 kJ/$m^2$, vorzugsweise von 5,0 bis 8,0 kJ/$m^2$; und/oder
- eine Charpy-Kerbschlagzähigkeit bei -20 °C (CNIS, -20 °C) von 1,0 bis 4,5 kJ/$m^2$, vorzugsweise von 1,5 bis 4,0 kJ/$m^2$.

**9.** Zusammensetzung gemäß einem der Ansprüche 1 bis 8, wobei das heterophasische Propylen-Copolymer (B) eine oder mehrere, vorzugsweise alle der folgenden Eigenschaften aufweist:

• einen Gehalt an kristalliner Fraktion (CF), bestimmt gemäß CRYSTEX QC-Analyse, im Bereich von 65,0 bis 90,0 Gew.-%, vorzugsweise im Bereich von 67,5 bis 89,0 Gew.-%, noch bevorzugter im Bereich von 70,0 bis 88,0 Gew.-%, bezogen auf das Gesamtgewicht des heterophasischen Propylen-Copolymers (B);
• eine intrinsische Viskosität der kristallinen Fraktion (iV(CF)) von nicht mehr als 1,2 dl/g, vorzugsweise im Bereich von 0,4 bis 1,1 dl/g;
• einen Ethylengehalt der kristallinen Fraktion (C2(CF)) von nicht mehr als 1,0 Gew.-%, vorzugsweise im Bereich von 0 bis 0,9 Gew.-%, bezogen auf das Gesamtgewicht der kristallinen Fraktion (CF), bestimmt durch FT-IR-Spektroskopie, kalibriert durch quantitative $^{13}C$-NMR-Spektroskopie;
• einen Ethylengehalt der löslichen Fraktion (C2(SF)) von 14,0 bis 29,0 Gew.-%, vorzugsweise im Bereich von 17,0 bis 26,0 Gew.-%, noch bevorzugter im Bereich von 19,0 bis 24,0 Gew.-%, bezogen auf das Gesamtgewicht der löslichen Fraktion (SF), bestimmt durch FT-IR-Spektroskopie, kalibriert durch quantitative $^{13}C$-NMR-Spektroskopie; und/oder
• einen Biegemodul im Bereich von 800 bis 1500 MPa, vorzugsweise im Bereich von 850 bis 1450 MPa, bestimmt gemäß ISO 178 an einem Spritzgussprüfkörper (80 $\times$ 10 $\times$ 4 $mm^3$), hergestellt gemäß EN ISO 1873-2;
• einen Gesamtethylengehalt im Bereich von 2,0 bis 5,5 Gew.-%, vorzugsweise im Bereich von 2,5 bis 5,0 Gew.-%, bezogen auf das Gesamtgewicht des heterophasischen Propylen-Copolymers (B), bestimmt durch FT-IR-Spektroskopie, kalibriert durch quantitative $^{13}C$-NMR-Spektroskopie;
• eine Schmelztemperatur im Bereich von 150 bis 162 °C, vorzugsweise im Bereich von 152 bis 160 °C, bestimmt durch DSC gemäß ISO 3146 (Teil 3, Methode C2);
• eine Kristallisationstemperatur im Bereich von 110 bis 130 °C, vorzugsweise im Bereich von 115 bis 125 °C, bestimmt durch DSC gemäß ISO 3146 (Teil 3, Methode C2);
• eine Charpy-Kerbschlagzähigkeit bei 23 °C im Bereich von 2,5 bis 15,0 $kJ/m^2$, vorzugsweise im Bereich von 3,0 bis 12,0 $kJ/m^2$, bestimmt gemäß ISO 179/eA an einem Spritzgussprüfkörper (80 $\times$ 10 $\times$ 4 $mm^3$), hergestellt gemäß EN ISO 1873-2;
• einen Gehalt an flüchtigen organischen Verbindungen (VOC) von nicht mehr als 50 $\mu$g/g, vorzugsweise nicht mehr als 40 $\mu$g/g, noch bevorzugter nicht mehr als 35 $\mu$g/g, bestimmt gemäß VDA 278; und/oder
• einen FOG-Gehalt von nicht mehr als 300 $\mu$g/g, vorzugsweise nicht mehr als 250 $\mu$g/g, noch bevorzugter nicht mehr als 225 $\mu$g/g, bestimmt gemäß VDA 278.

**10.** Verfahren zur Herstellung der Zusammensetzung gemäß einem der Ansprüche 1 bis 9, umfassend die folgenden Schritte:

a) Polymerisation von Propylen in Gegenwart eines Single-Site Katalysatorsystems in einem ersten Polymerisationsreaktor zur Herstellung einer ersten Propylenpolymerfraktion;
b) Überführen eines Polymerisationsgemisches, das das Single-Site Katalysatorsystem und die erste Propylenpolymerfraktion umfasst, aus dem ersten Polymerisationsreaktor in einen zweiten Polymerisationsreaktor;
c) Polymerisation von Propylen in Gegenwart des Single-Site Katalysatorsystems in dem zweiten Polymerisationsreaktor zur Herstellung einer zweiten Propylenpolymerfraktion;
d) Überführen eines Polymerisationsgemisches, das das Single-Site Katalysatorsystem sowie die erste und zweite Propylenpolymerfraktion umfasst, aus dem zweiten Polymerisationsreaktor in einen dritten Polymerisationsreaktor;
e) Polymerisation von Propylen und Ethylen in Gegenwart eines Single-Site Katalysatorsystems im dritten Polymerisationsreaktor zur Herstellung einer dritten Propylen-Ethylen-Copolymerfraktion;
f) Entnehmen eines Polymerisationsgemisches, das das Single-Site Katalysatorsystem, die erste und zweite Propylenpolymerfraktion sowie die dritte Propylen-Ethylen-Copolymerfraktion umfasst, aus dem dritten Polymerisationsreaktor; und
g) Gewinnen des heterophasischen Propylen-Copolymers (B), das die erste und zweite Propylen-Polymerfraktion sowie die dritte Propylen-Ethylen-Copolymerfraktion umfasst;
h) Mischen von 5 bis 50 Gew.-%, vorzugsweise 10 bis 45 Gew.-%, noch bevorzugter 12 bis 40 Gew.-% des heterophasischen Propylen-Copolymers (B) mit 50 bis 95 Gew.-%, vorzugsweise 55 bis 90 Gew.-%, noch bevorzugter 60 bis 88 Gew.-% der Polypropylen/Polyethylen Mischkunststoffmischung (A).

**11.** Verfahren nach Anspruch 10, wobei das Single-Site Katalysatorsystem (i) einen Metallocenkomplex der allgemeinen Formel (I) umfasst

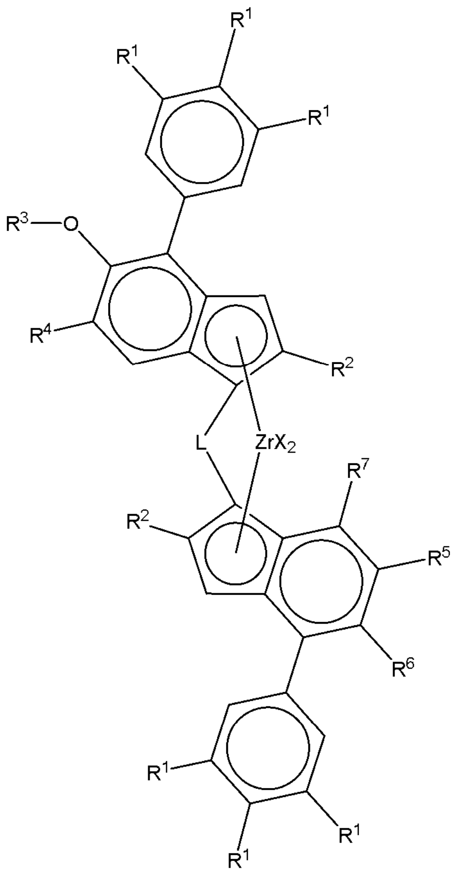

Formel (I),

wobei

jedes X unabhängig voneinander ein Sigma-Donor-Ligand ist,

L eine zweiwertige Brücke ist, ausgewählt aus $-R'_2C-$, $-R'_2C-CR'_2-$, $-R'_2Si-$, $-R'_2Si-SiR'_2-$, $-R'_2Ge-$, wobei jedes R' unabhängig voneinander ein Wasserstoffatom oder eine $C_1$-$C_{20}$ Kohlenwasserstoffgruppe ist, die gegebenenfalls ein oder mehrere Heteroatome aus den Gruppen 14-16 des Periodensystems oder Fluoratome enthält, oder wobei gegebenenfalls zwei R'-Gruppen zusammen einen Ring bilden können,

jedes $R^1$ unabhängig voneinander gleich oder unterschiedlich sein kann und Wasserstoff, eine lineare oder verzweigte $C_1$-$C_6$ Alkylgruppe, eine $C_{7-20}$ Arylalkyl-, $C_{7-20}$ Alkylarylgruppe oder eine $C_{6-20}$ Arylgruppe oder eine OY-Gruppe ist, wobei Y eine $C_{1-10}$ Kohlenwasserstoffgruppe ist, und optional zwei benachbarte $R^1$-Gruppen Teil eines Rings sein können, der die Phenylkohlenstoffe einschließt, an die sie gebunden sind,

jedes $R^2$ unabhängig voneinander gleich oder unterschiedlich sein kann und eine $CH_2$-$R^8$ Gruppe darstellt, wobei $R^8$ H oder eine lineare oder verzweigte $C_{1-6}$ Alkylgruppe, eine $C_{3-8}$ Cycloalkylgruppe, eine $C_{6-10}$ Arylgruppe ist,

$R^3$ eine lineare oder verzweigte $C_1$-$C_6$ Alkylgruppe, eine $C_{7-20}$ Arylalkylgruppe, eine $C_{7-20}$ Alkylarylgruppe oder eine $C_6$-$C_{20}$ Arylgruppe ist,

$R^4$ eine $C(R^9)_3$ Gruppe ist, wobei $R^9$ eine lineare oder verzweigte $C_1$-$C_6$ Alkylgruppe ist,

$R^5$ Wasserstoff oder eine aliphatische $C_1$-$C_{20}$ Kohlenwasserstoffgruppe ist, die gegebenenfalls ein oder mehrere Heteroatome aus den Gruppen 14-16 des Periodensystems enthält;

$R^6$ Wasserstoff oder eine aliphatische $C_1$-$C_{20}$ Kohlenwasserstoffgruppe ist, die gegebenenfalls ein oder mehrere Heteroatome aus den Gruppen 14-16 des Periodensystems enthält; oder

$R^5$ und $R^6$ zusammen einen 5-gliedrigen gesättigten Kohlenstoffring bilden können, der gegebenenfalls durch n Gruppen $R^{10}$ substituiert ist, wobei n zwischen 0 und 4 liegt;

jedes $R^{10}$ gleich oder verschieden ist und eine $C_1$-$C_{20}$ Kohlenwasserstoffgruppe oder eine $C_1$-$C_{20}$ Kohlenwasserstoffgruppe sein kann, die gegebenenfalls ein oder mehrere Heteroatome der Gruppen 14-16 des Periodensystems enthält;

$R^7$ H oder eine lineare oder verzweigte $C_1$-$C_6$ Alkylgruppe oder eine Aryl- oder Heteroarylgruppe mit 6 bis 20 Kohlenstoffatomen ist, die gegebenenfalls durch eine bis drei Gruppen $R^{11}$ substituiert ist,

wobei jedes $R^{11}$ unabhängig gleich oder unterschiedlich sein kann und Wasserstoff, eine lineare oder verzweigte $C_1$-$C_6$ Alkylgruppe, eine $C_{7-20}$ Arylalkyl-, $C_{7-20}$ Alkylarylgruppe oder eine $C_{6-20}$ Arylgruppe oder eine OY-Gruppe

ist, wobei Y eine $C_{1-10}$ Kohlenwasserstoffgruppe ist,
(ii) einen Aluminoxan Cokatalysator und
(iii) einen Siliciumdioxidträger.

**12.** Ein Gegenstand, der die Zusammensetzung gemäß einem der Ansprüche 1 bis 11 umfasst.

**13.** Der Gegenstand gemäß Anspruch 12, der ein Automobilartikel oder ein Verpackungsartikel ist.

**14.** Verwendung der Polypropylen Zusammensetzung gemäß einem der Ansprüche 1 bis 11 als Compound-Basis zur Herstellung eines Gegenstands.

**15.** Verwendung eines heterophasischen Propylen-Copolymers mit

• einer Schmelzflussrate $MFR_2$ (230 °C, 2,16 kg, ISO 1133) von 105 bis 320 g/10 min, vorzugsweise 107 bis 300 g/10 min, noch bevorzugter 110 bis 280 g/10 min;
• einem Gehalt an löslicher Fraktion (SF), bestimmt gemäß CRYSTEX QC-Analyse, im Bereich von 10,0 bis 35,0 Gew.-%, vorzugsweise im Bereich von 11,0 bis 32,5 Gew.-%, noch bevorzugter im Bereich von 12,0 bis 30,0 Gew.-%, und
• einer intrinsischen Viskosität der genannten löslichen Fraktion (iV(SF)), gemessen in Decalin gemäß DIN ISO 1628/1 bei 135 °C, von mindestens 2,0 dl/g, vorzugsweise im Bereich von 2,3 bis 4,5 dl/g, noch bevorzugter im Bereich von 2,5 bis 4,3 dl/g;

in einer Zusammensetzung gemäß einem der Ansprüche 1 bis 11 zur Erhöhung der Schmelzflussrate $MFR_2$ (230 °C, 2,16 kg, ISO 1133) und des Biegemoduls sowie zur Verringerung des VOC- und FOG-Gehalts der Zusammensetzung.

## Revendications

**1.** Composition pouvant être obtenue par mélange des composants (A) et (B)

(A) 50 à 95 % en poids, de préférence 55 à 90 % en poids, plus préférentiellement 60 à 88 % en poids d'un mélange de plastiques mixtes polypropylène/polyéthylène ; et
(B) 5 à 50 % en poids, de préférence 10 à 45 % en poids, plus préférentiellement 12 à 40 % en poids d'un copolymère de propylène hétérophasique ; moyennant quoi tous les pourcentages font référence à la composition totale, et moyennant quoi

le mélange de plastiques mixtes polypropylène/polyéthylène (A) présente

- une teneur en fraction cristalline (CF) déterminée selon l'analyse CRYSTEX QC dans la plage de 85,0 à 96,0 % en poids, de préférence dans la plage de 86,5 à 95,5 % en poids ; et
- une teneur en fraction soluble (SF) déterminée selon l'analyse CRYSTEX QC dans la plage de 4,0 à 15,0 % en poids, de préférence dans la plage de 4,5 à 13,5 % en poids ;
- ladite fraction cristalline (CF) présente une teneur en éthylène (C2(CF)), telle que déterminée par spectroscopie FTIR étalonnée par spectroscopie RMN $^{13}C$ quantitative, dans la plage de 11,0 à 55,0 % en poids, de préférence dans la plage de 20,0 à 49,5 % en poids ; et
- ladite fraction soluble (SF) présente une viscosité intrinsèque (iV(SF)) dans la plage de 0,9 à 2,1 dl/g, de préférence dans la plage de 1,0 à 2,0 dl/g ;

le copolymère de propylène hétérophasique (B) comprend une phase de matrice et une phase élastomère dispersée dans celle-ci et présente

- un indice de fluidité $MFR_2$ (230 °C, 2,16 kg, ISO 1133) de 105 à 320 g/10 min, de préférence 107 à 300 g/10 min, plus préférentiellement 110 à 280 g/10 min ;
- une teneur en fraction soluble (SF) déterminée selon l'analyse CRYSTEX QC dans la plage de 10,0 % en poids à 35,0 % en poids, de préférence dans la plage de 11,0 à 32,5 % en poids, plus préférentiellement dans la plage de 12,0 à 30,0 % en poids, et
- une viscosité intrinsèque de ladite fraction soluble (iV(SF)), telle que mesurée dans la décaline selon la

norme DIN ISO 1628/1 à 135 °C d'au moins 2,0 dl/g, de préférence dans la plage de 2,3 à 4,5 dl/g, plus préférentiellement dans la plage de 2,5 à 4,3 dl/g ;

la composition présente

- un indice de fluidité $MFR_2$ (230 °C, 2,16 kg, ISO 1133) d'au moins 9,0 g/10 min, de préférence 9,5 à 100 g/10 min, et plus préférentiellement 10,0 à 75 g/10 min.

**2.** Composition selon la revendication 1 présentant un module d'élasticité en flexion (FM) dans la plage de 800 à 1300 MPa, de préférence dans la plage de 850 à 1200 MPa, plus préférentiellement dans la plage de 865 à 1050 MPa, déterminé selon la norme ISO 178 sur éprouvette de moulage par injection (80 x 10 x 4 $mm^3$) telle que produite selon la norme EN ISO 1873-2.

**3.** Composition selon les revendications 1 ou 2 présentant une résistance aux chocs sur éprouvette entaillée Charpy à 23 °C dans la plage de 5,0 à 25,0 $kJ/m^2$, de préférence dans la plage de 5,5 à 20,0 $kJ/m^2$, déterminée selon la norme ISO 179/eA sur une éprouvette de moulage par injection (80 x 10 x 4 $mm^3$) telle que produite selon la norme EN ISO 1873-2.

**4.** Composition selon l'une des revendications 1 à 3 présentant une résistance aux chocs sur éprouvette entaillée Charpy à 23 °C, qui répond à l'inéquation suivante en relation avec son indice de fluidité $MFR_2$ (230 °C, 2,16 kg, ISO 1133)

CNIS, 23 °C [$kJ/m^2$] > 7,8 [$kJ/m^2$] - 0,17 [$kJ/m^2$/g/10 min] · $MFR_2$ [g/10 min] avec

CNIS, 23 °C étant la résistance aux chocs sur éprouvette entaillée Charpy à 23 °C de la composition, déterminée selon la norme ISO 179/eA sur éprouvette de moulage par injection (80 x 10 x 4 $mm^3$) telle que produite selon la norme EN ISO 1873-2, et $MFR_2$ étant l'indice de fluidité $MFR_2$ (230 °C, 2,16 kg, ISO 1133) de la composition.

**5.** Composition selon l'une des revendications 1 à 4 présentant une résistance aux chocs sur éprouvette entaillée Charpy à -20 °C dans la plage de 1,7 à 5,0 $kJ/m^2$, de préférence dans la plage de 1,9 à 4,0 $kJ/m^2$, déterminée selon la norme ISO 179/eA sur éprouvette de moulage par injection (80 x 10 x 4 $mm^3$) telle que produite selon la norme EN ISO 1873-2.

**6.** Composition selon l'une des revendications 1 à 5 présentant une ou plusieurs, de préférence la totalité, des propriétés suivantes :

- une teneur en composés organiques volatils (COV) n'excédant pas 100 $\mu$g/g, de préférence dans la plage de 5 à 95 $\mu$g/g, plus préférentiellement dans la plage de 10 à 90 $\mu$g/g, déterminée selon VDA 278 ; et/ou
- une teneur en composés semi-volatils n'excédant pas 1100 $\mu$g/g, de préférence dans la plage de 50 à 1050 $\mu$g/g, plus préférentiellement dans la plage de 80 à 1000 $\mu$g/g, déterminée selon VDA 278 ; et/ou
- une quantité de condensation n'excédant pas 5,0 mg, de préférence dans la plage de 0,5 à 4,5 mg, déterminée selon la norme DIN75201, partie B, sur des plaques moulées par compression de 2 mm d'épaisseur.

**7.** Composition selon l'une des revendications 1 à 6 comprenant des composants polymères supplémentaires en une quantité allant jusqu'à 5 % en poids, de préférence jusqu'à 2 % en poids, plus préférentiellement en une quantité de 0 % en poids.

**8.** Composition selon l'une des revendications 1 à 7, dans laquelle le mélange de plastiques mixtes polypropylène/-polyéthylène (A) présente une ou plusieurs, de préférence la totalité, des propriétés suivantes :

- une viscosité intrinsèque de la fraction cristalline (iV(CF)), telle que mesurée dans la décaline selon la norme DIN ISO 1628/1 à 135 °C, dans la plage de 1,0 à moins de 2,6 dl/g, plus préférentiellement dans la plage de 1,2 à 2,5 dl/g ;
- une teneur en éthylène de la fraction soluble (C2(SF)), telle que déterminée par spectroscopie FTIR étalonnée par spectroscopie RMN $^{13}C$ quantitative, dans la plage de 20,0 à 55,0 % en poids, de préférence dans la plage de 22,0 à 50,0 % en poids ;
- un indice de fluidité $MFR_2$ (230 °C, 2,16 kg, ISO1133) de 5,0 à 50 g/10 min, de préférence de 5,2 à 45 g/10 min, plus préférentiellement de 5,4 à 40 g/10 min ;

- des motifs dérivés de l'éthylène en une quantité de 5,0 à 50,0 % en poids, plus préférentiellement de 10,0 à 48,5 % en poids, encore plus préférentiellement de 25,0 à 47,0 % en poids ;
- des motifs dérivés du propylène en une quantité de 50,0 à 95,0 % en poids, plus préférentiellement de 51,5 à 90,0 % en poids, encore plus préférentiellement de 53,0 à 75,0 % en poids ;

c) une teneur en limonène comme déterminée en utilisant une microextraction en phase solide (HS-SPME-GC-MS) : 0,1 à 50 ppm ; et/ou

- un module d'élasticité en traction de 800 à 1400 MPa, de préférence de 850 à 1200 MPa et/ou
- une résistance aux chocs sur éprouvette entaillée Charpy à 23 °C (CNIS, 23 °C) de 4,0 à 8,5 kJ/$m^2$, de préférence de 5,0 à 8,0 kJ/$m^2$ ; et/ou
- une résistance aux chocs sur éprouvette entaillée Charpy à -20 °C (CNIS, -20 °C) de 1,0 à 4,5 kJ/$m^2$, de préférence de 1,5 à 4,0 kJ/$m^2$.

**9.** Composition selon l'une des revendications 1 à 8, dans laquelle le copolymère de propylène hétérophasique (B) présente une ou plusieurs, de préférence la totalité, des propriétés suivantes :

- une fraction cristalline (FC), déterminée selon l'analyse CRYSTEX QC en une quantité dans la plage de 65,0 à 90,0 % en poids, de préférence dans la plage de 67,5 à 89,0 % en poids, plus préférentiellement dans la plage de 70,0 à 88,0 % en poids, sur la base du poids total du copolymère de propylène hétérophasique (B) ;
- une viscosité intrinsèque de la fraction cristalline (iV(CF)) n'excédant pas 1,2 dl/g, de préférence dans la plage de 0,4 à 1,1 dl/g ;
- une teneur en éthylène de la fraction cristalline (C2(CF)) n'excédant pas 1,0 % en poids, de préférence dans la plage de 0 à 0,9 % en poids, sur la base du poids total de la fraction cristalline (CF), telle que déterminée par spectroscopie FTIR étalonnée par spectroscopie RMN $^{13}C$ quantitative ;
- une teneur en éthylène de la fraction soluble (C2(SF)) de 14,0 à 29,0 % en poids, de préférence dans la plage de 17,0 à 26,0 % en poids, plus préférentiellement dans la plage de 19,0 à 24,0 % en poids, sur la base du poids total de la fraction soluble (SF), telle que déterminée par spectroscopie FTIR étalonnée par spectroscopie RMN $^{13}C$ quantitative ; and/ou
- un module d'élasticité en flexion dans la plage de 800 à 1500 MPa, de préférence dans la plage de 850 à 1450 MPa, déterminé selon la norme ISO 178 sur éprouvette moulée par injection (80 x 10 x 4 $mm^3$) telle que produite selon la norme EN ISO 1873-2 ;
- une teneur totale en éthylène dans la plage de 2,0 à 5,5 % en poids, de préférence dans la plage de 2,5 à 5,0 % en poids, sur la base du poids total du copolymère de propylène hétérophasique (B), tel que déterminée par spectroscopie FTIR étalonnée par spectroscopie RMN $^{13}C$ quantitative ;
- une température de fusion dans la plage de 150 à 162 °C, de préférence dans la plage de 152 à 160 °C, déterminée par ACD selon la norme ISO 3146 (partie 3, méthode C2) ;
- une température de cristallisation dans la plage de 110 à 130 °C, de préférence dans la plage de 115 à 125 °C, déterminée par ACD selon la norme ISO 3146 (partie 3, méthode C2) ;
- une résistance aux chocs sur éprouvette entaillée Charpy à 23 °C dans la plage de 2,5 à 15,0 kJ/$m^2$, de préférence dans la plage de 3,0 à 12,0 kJ/$m^2$, déterminée selon la norme ISO 179/eA sur éprouvette moulée par injection (80 x 10 x 4 $mm^3$) telle que produite selon la norme EN ISO 1873-2 ;
- une teneur en composés organiques volatils (COV) n'excédant pas 50 $\mu$g/g, de préférence pas 40 $\mu$g/g, plus préférentiellement pas 35 $\mu$g/g, déterminée selon VDA 278 ; et/ou
- une teneur en composés semi-volatils n'excédant pas 300 $\mu$g/g, de préférence pas 250 $\mu$g/g, plus préférentiellement pas 225 $\mu$g/g, déterminée selon VDA 278.

**10.** Procédé pour produire la composition selon l'une des revendications 1 à 9 comprenant les étapes de :

a) polymérisation de propylène en présence d'un système de catalyseur à site unique dans un premier réacteur de polymérisation pour produire une première fraction de polymère de propylène ;
b) transfert d'un mélange de polymérisation comprenant le système de catalyseur à site unique et la première fraction de polymère de propylène depuis le premier réacteur de polymérisation vers un deuxième réacteur de polymérisation ;
c) polymérisation de propylène en présence du système de catalyseur à site unique dans le deuxième réacteur de polymérisation pour produire une deuxième fraction de polymère de propylène ;
d) transfert d'un mélange de polymérisation comprenant le système de catalyseur à site unique et les première et deuxième fractions de polymère de propylène depuis le deuxième réacteur de polymérisation vers un troisième réacteur de polymérisation ;
e) polymérisation de propylène et d'éthylène en présence d'un système de catalyseur à site unique dans le

troisième réacteur de polymérisation pour produire une troisième fraction de copolymère de propylène-éthylène ;
f) retrait d'un mélange de polymérisation comprenant le système de catalyseur à site unique, les première et deuxième fractions de polymère de propylène et la troisième fraction de copolymère de propylène-éthylène à partir du troisième réacteur de polymérisation ; et
g) obtention du copolymère de propylène hétérophasique (B) comprenant les première et deuxième fractions de polymère de propylène et la troisième fraction de copolymère de propylène-éthylène ;
h) mélange de 5 à 50 % en poids, de préférence 10 à 45 % en poids, plus préférentiellement 12 à 40 % en poids du copolymère de propylène hétérophasique (B) avec 50 à 95 % en poids, de préférence 55 à 90 % en poids, plus préférentiellement 60 à 88 % en poids du mélange de plastiques mixtes polypropylène/polyéthylène (A).

**11.** Procédé selon la revendication 10, dans lequel le système catalytique à site unique (i) comprend un complexe métallocène de formule générale (I)

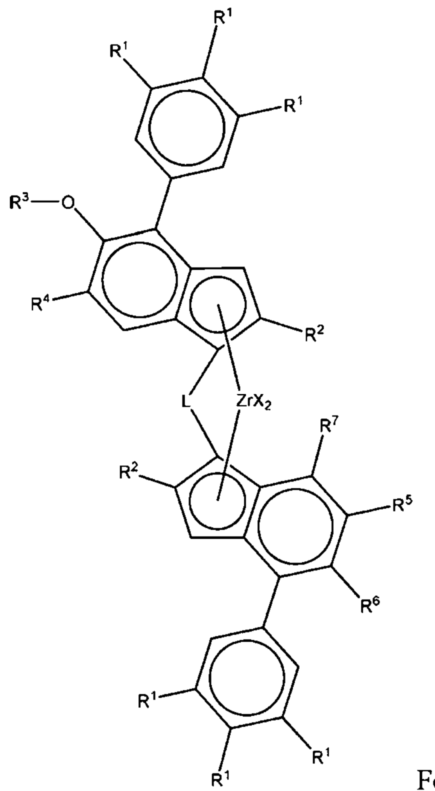

Formula (I)

dans lequel

chaque X est indépendamment un ligand sigma-donneur,
L est un pont divalent sélectionné parmi $-R'_2C-$,$-R'_2C-CR'_2-$, $-R'_2Si-$, $-R'_2Si-SiR'_2-$, $-R'_2Ge-$, dans lequel chaque R' est indépendamment un atome d'hydrogène ou un groupe hydrocarbyle en $C_1$-$C_{20}$ contenant optionnellement un ou plusieurs hétéroatomes des groupes 14-16 du tableau périodique ou atomes de fluor, ou optionnellement deux groupes R' pris ensemble peuvent former un anneau,
les $R^1$ sont chacun indépendamment identiques ou peuvent être différents et sont hydrogène, un groupe alkyle linéaire ou ramifié en $C_1$-$C_6$, un arylalkyle en $C_{7-20}$, un groupe alkylaryle en $C_{7-20}$ ou un groupe aryle en $C_{6-20}$ ou un groupe OY, dans lequel Y est un groupe hydrocarbyle en $C_{1-10}$, et optionnellement deux groupes $R^1$ adjacents peuvent faire partie d'un anneau comportant les carbones du phényl auxquels ils sont liés,
les $R^2$ sont chacun indépendamment identiques ou peuvent être différents et sont un groupe $CH_2$-$R^8$, $R^8$ étant H ou un groupe alkyle en $C_{1-6}$ linéaire ou ramifié, un groupe cycloalkyle en $C_3$-$C_8$, un groupe aryle en $C_6$-$C_{10}$,
$R^3$ est un groupe alkyle en $C_1$-$C_6$ linéaire ou ramifié, un arylalkyle en $C_{7-20}$, un groupe alkylaryle en $C_{7-20}$ ou un groupe aryle en $C_6$-$C_{20}$,
$R^4$ est un groupe $C(R^9)_3$, $R^9$ étant un groupe alkyle en $C_1$-$C_6$ linéaire ou ramifié,
$R^5$ est hydrogène ou un groupe hydrocarbyle en $C_1$-$C_{20}$ aliphatique contenant optionnellement un ou plusieurs hétéroatomes des groupes 14-16 du tableau périodique ;

$R^6$ est hydrogène ou un groupe hydrocarbyle en $C_1$-$C_{20}$ aliphatique contenant optionnellement un ou plusieurs hétéroatomes des groupes 14-16 du tableau périodique ; ou
$R^5$ et $R^6$ peuvent être pris ensemble pour former un anneau carboné saturé à 5 chaînons qui est optionnellement substitué avec n groupes $R^{10}$, n allant de 0 à 4 ;
chaque $R^{10}$ est identique ou différent et peut être un groupe hydrocarbyle en $C_1$-$C_{20}$, ou un groupe hydrocarbyle en $C_1$-$C_{20}$ contenant optionnellement un ou plusieurs hétéroatomes appartenant aux groupes 14-16 du tableau périodique ;
$R^7$ est H ou un groupe alkyle linéaire ou ramifié en $C_1$-$C_6$ ou un groupe aryle ou hétéroaryle ayant 6 à 20 atomes de carbone optionnellement substitué avec un à trois groupes $R^{11}$, les $R^{11}$ sont chacun indépendamment identiques ou peuvent être différents et sont hydrogène, un groupe alkyle linéaire ou ramifié en $C_1$-$C_6$, un arylalkyle en $C_{7-20}$, un groupe alkylaryle en $C_{7-20}$ ou un groupe aryle en $C_{6-20}$ ou un groupe OY, dans lequel Y est un groupe hydrocarbyle en $C_{1-10}$,
(ii) un cocatalyseur aluminoxane, et
(iii) un support en silice.

**12.** Article comprenant la composition selon l'une des revendications 1 à 11.

**13.** Article selon la revendication 12 qui est un article automobile ou un article de conditionnement.

**14.** Utilisation de la composition de polypropylène selon l'une des revendications 1 à 11 comme base de composé pour la production d'un article.

**15.** Utilisation d'un copolymère de propylène hétérophasique ayant

- un indice de fluidité $MFR_2$ (230 °C, 2,16 kg, ISO 1133) de 105 à 320 g/10 min, de préférence 107 à 300 g/10 min, et plus préférentiellement 110 à 280 g/10 min ;
- une teneur en fraction soluble (SF) déterminée selon l'analyse CRYSTEX QC dans la plage de 10,0 à 35,0 % en poids, de préférence dans la plage de 11,0 à 32,5 % en poids, plus préférentiellement de 12,0 à 30,0 % en poids, et
- une viscosité intrinsèque de ladite fraction soluble (iV(SF)) telle que mesurée dans la décaline selon la norme DIN ISO 1628/1 à 135 °C d'au moins 2,0 dl/g,

de préférence dans la plage de 2,3 à 4,5 dl/g, plus préférentiellement dans la plage de 2,5 à 4,3 dl/g ;
dans une composition selon l'une des revendications 1 à 11 pour augmenter l'indice de fluidité $MFR_2$ (230 °C, 2,16 kg, ISO1133) et le module d'élasticité en flexion et réduire la teneur en COV et en composés semi-volatils de ladite composition.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 21178566 A
- EP 21178547 A
- WO 2007116034 A
- WO 200202576 A
- WO 2011135004 A
- WO 2012084961 A
- WO 2012001052 A
- WO 2011076780 A
- WO 2015158790 A
- WO 2018122134 A
- WO 2019179959 A
- WO 2020239598 A1
- WO 2019179959 A1
- WO 2021144401 A1

### Non-patent literature cited in the description


- **ZHOU, Z.** ; **KUEMMERLE, R.** ; **QIU, X.** ; **REDWINE, D.** ; **CONG, R.** ; **TAHA, A.** ; **BAUGH, D. WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **CHENG, H. N.** *Macromolecules*, 1984, vol. 17, 1950
- **L. RESCONI** ; **L. CAVALLO** ; **A. FAIT** ; **F. PIEMONTESI**. *Chem. Rev.*, 2000, vol. 100 (4), 1253
- **W-J. WANG** ; **S. ZHU**. *Macromolecules*, 2000, vol. 33, 1157
- **WANG, W-J.** ; **ZHU, S.** *Macromolecules*, 2000, vol. 33, 1157
- **KAKUGO, M.** ; **NAITO, Y.** ; **MIZUNUMA, K.** ; **MIYATAKE, T.** *Macromolecules*, 1982, vol. 15, 1150